# EUROPEAN PATENT APPLICATION

(11) **EP 1 276 047 A2**
(43) Date of publication of application: **15.01.2003**
(21) Application number: 02254784.8
(22) Date of filing: 09.07.2002
(51) Int. Cl.: G06F 9/50, G06F 11/34

(54) **System controller for use in a distributed processing framework system and methods for implementing the same**

(30) Priority: 11.07.2001 US 304919 P; 28.09.2001 US 967646
(71) Applicant: Sun Microsystems, Inc., Santa Clara, California 95054 (US)
(72) Inventor: Avvari, Madhava V., Cupertino 95014, California (US); Dodda, Satya, San Jose 95135, California (US); Herron, David S., Fremont 94536, California (US); Kim, Bae-Chul, San Jose 95121, California (US); Reynaga, Gabriel R., Cupertino 95014, California (US); Patil, Narendra, Santa Clara 95054, California (US); Boudnik, Konstantin I, Santa Clara 95051, California (US)
(74) Representative: Collins, John David

(57) **Abstract**

A method for managing an execution of a software processing job is provided. The method includes enabling a controller code and finding a suitable and available networked processing resource to execute the software processing job. The processing resource is configured to be registered with a registry service. Also included in the method is monitoring the execution of the software processing job by a selected processing resource as well as an availability of the selected processing resource while the controller code is enabled. The controller code is designed to be executed on a networked computer.

## Description

### BACKGROUND OF THE INVENTION

### 1. Field of the Invention

The present invention relates generally to software processing, and more particularly, to methods and systems for managing the distribution and processing of computing operations.

### 2. Description of the Related Art

As the use of software in performing daily tasks is increasing rapidly, assessing software reliability through software testing has become an imperative stage in software development cycle. As is well known, software testing is used to find and eliminate defects (i.e., bugs) in software, which if undetected, can cause the software to operate improperly. In general, software testing may be performed by implementing a stand-alone computer or a network of computer resources. When a stand-alone computer system is used to perform the software testing, the stand-alone computer system is programmed to run a test selected by the software user. Comparatively, if a network of computer resources is used, the user is responsible for manually adding and deleting the computer resources to the network, programming the master computer system and the server, initiating the running of a user-selected test, and running the test on the group of dedicated computer systems coupled to the server.

In either scenario, a heavy user interface is required for initiating the software testing on the master computer, scheduling the running of the specific test on the system resources, adding and deleting of the system resources, keeping track of the system resources and their respective hardware and software configuration, and maintaining the system resources. Additionally, in either case, the software testing is performed by dedicated system resources. That is, the system resources are designed to solely be used for software testing.

At least two drawbacks can be associated with the current state of software testing described above. First, the significant role of human interaction causes software testing to be very time consuming and costly. In certain situations, this setback is extrapolated as a result of human error. Second, currently, computer resources are being wasted, as the computer resources are solely dedicated to software testing.

In view of the foregoing, there is a need for a flexible methodology and system capable of scheduling, distributing, and managing the processing of a computer software by dynamic, cross-platform computer resources.

### SUMMARY OF THE INVENTION

Broadly speaking, one aspect of the present invention fills these needs by providing a system controller configured to schedule, distribute, and manage the execution of a process by ad-hoc cross-platform distributed processing resources. In one embodiment, the system controller is implemented in a distributed processing framework (DPF) system. In a different example, the system controller is implemented in a distributed test framework (DTF) system and is configured to schedule, distribute, and manage the execution of a software test suite by cross-platform, dynamically networked distributed computer resources. It should be appreciated that the present invention can be implemented in numerous ways, including as a process, an apparatus, a system, a device, or a method. The present invention can also be implemented in software. Several inventive embodiments of the present invention are described below.

In one embodiment, a method for managing an execution of a software processing job is disclosed. The method includes enabling a controller code and finding a suitable and available networked processing resource to execute the software processing job. The processing resource is configured to be registered with a registry service. Also included in the method is monitoring the execution of the software processing job by a selected processing resource as well as an availability of the selected processing resource while the controller code is enabled. The controller code is designed to be executed on a networked computer.

In another embodiment, a process execution scheduling method is disclosed. The method includes launching a controller code on a computer system and determining the existence of a process for execution. The determining the existence of a process for execution includes scheduling the process to be executed by a selected processing resource that is registered with a registry service if the process awaits execution. As designed, the selected processing resource is one of many processing resources being networked with the computer system. The scheduling is designed to include reading a set of attributes of the process and searching the registry service for the selected processing resource. The selected processing resource is configured to have a set of attributes substantially matching the set of attributes of the process. The scheduling further includes contacting the selected processing resource and submitting the job execution to the selected processing resource. The process execution scheduling method further includes waiting for the process to be submitted for execution if there are no processes awaiting execution.

In yet another embodiment, a process execution scheduling, distributing, and management system is disclosed. The system includes a communication module and a process management module. The communication module is designed to enable and manage communication between the system and a processing resource registered with a registry service. As designed, the processing resource is configured to execute a process. The process management module is designed to manage the execution of the process by implementing an inqueue directory. The inqueue directory is designed to contain a file substantially for each process submitted for execution.

Other aspects and advantages of the invention will become apparent from the following detailed description, taken in conjunction with the accompanying drawings, illustrating by way of example the principles of the invention.

### BRIEF DESCRIPTION OF THE DRAWINGS

The present invention will be readily understood by the following detailed description in conjunction with the accompanying drawings, and like reference numerals designate like structural elements.
Figure 1 is a block diagram illustrating a distributed test framework (DTF) system, in accordance with one embodiment of the present invention.
Figure 2 is a block diagram illustrating the capability of the present invention to intelligently locate an available and suitable test system to execute a test suite, in accordance with another embodiment of the present invention.
Figure 3 is a block diagram illustrating the implementation of the test system attributes to locate a suitable test system to process a test execution request, in accordance with yet another embodiment of the present invention.
Figure 4 is a block diagram illustrating the capability of the present invention to locate an available and suitable test system to process a test execution request having a set of specific requirements, in accordance to yet another embodiment of the present invention.
Figure 5 is a block diagram depicting the one-to-one communication between the system controller, Jini™ look up service, and a test system of a DTF system, in accordance to still another embodiment of the present invention.
Figure 6 is a block diagram showing the interaction between the Jini look up service, system controller, and a test system, in accordance with still another embodiment of the present invention.
Figure 7 is depicts a DTF utility graphical user interface (GUI), in accordance to yet another embodiment of the present invention.
Figure 8 is a DTF utility graphical user interface (GUI), in accordance to yet another embodiment of the present invention.
Figure 9 is a DTF utility graphical user interface (GUI), in accordance to still another embodiment of the present invention
Figure 10 is a flow chart diagram illustrating a method operations implemented by a distributed processing framework (DPF) system to execute a process, in accordance with yet another embodiment of the present invention.
Figure 11 is a flow chart diagram illustrating the method operations implemented by a distributed test framework system in executing a test suite, in accordance with still another embodiment of the present invention.
Figure 12 is a flow chart diagram of a method operations implemented by a system controller of a DPF system, in accordance with still another embodiment of the present invention.
Figure 13A is a flow chart diagram of a method operations performed by a system controller to schedule jobs, in accordance with still another embodiment of the present invention.
Figure 13B is a flow chart diagram of a method operations performed by the system controller to contact the selected test system, in accordance with yet another embodiment of the present invention.

### Detailed Description of the Preferred Embodiments

A system controller for use in a distributed processing framework (DPF) system and methods for making and implementing the same are disclosed. In the following description, numerous specific details are set forth in order to provide a thorough understanding of the present invention. It will be understood, however, to one skilled in the art, that the present invention may be practiced without some or all of these specific details. In other instances, well known process operations have not been described in detail in order not to unnecessarily obscure the present invention.

As an overview, one aspect of the present invention relates to creating a system controller to schedule, distribute, and manage a process being executed by cross-platform dynamically networked distributed processing resources. In one example, the system controller of the present invention is used in a distributed processing framework (DFP) system and is configured to schedule, distribute, and manage a process being executed utilizing cross-platform dynamically networked distributed processing resources. In one embodiment, the system controller is configured to include a suite management module and a communication module. The management module is responsible for managing the processing of a submitted process while the communication module is configured to manage the communication between the system controller and the distributed processing resources.

The system controller implemented in the DPF system is configured to have the capability to intelligently select and utilize computer resources of the ad-hoc network of distributed computer resources having either the same or different software/hardware configuration to execute a process. As used herein, an "ad-hoc" or a "dynamic" network is defined as a network in which the processing resources may be part of the network temporarily and for a specific length of time (i.e., spontaneous). In one example, the system controller of the present invention is implemented in the DPF system and uses the Jini™ (hereinafter "Jini") technology to provide spontaneous interaction between its components. In this manner, the processing resources attach to and detach from the ad-hoc network of computer resources without disturbing the DPF system. Accordingly, the system controller has the capability to manage the process being executed by a plurality of processing resources not solely limited to executing processes submitted to the DPF system.

In one exemplary embodiment, the DPF system is a distributed test framework (DTF) system configured to manage test suite execution on cross-platform dynamically networked computer systems. In one implementation, the DTF system includes a server computer system and a plurality of ad-hoc network of resources configured to spontaneously interact implementing a device registry. The server computer system is configured to include a device registry (e.g., Jini look up service) and the system controller configured to manage the processing of the submitted test suites. In one instance, the plurality of test systems join the Jini look up service by registering their respective proxies and corresponding attributes. In one example, the system controller searches the look up service for an available and suitable test system to process each of the submitted test suites. Once a test system is selected to run the test suite, the machine service component of the selected computer resource spawns a second service to execute the test suite.

For ease of understanding, a detailed description of the Distributed Processing Framework System will be provided in Section I, and a detailed description of the System Controller for use in a Distributed Processing Framework System will be provided in Section II.

### I. Distributed Processing Framework System

As one embodiment of the present invention implements the Jini technology, a brief introduction to Jini is provided below. Nevertheless, this brief introduction to Jini should not be considered as limiting as Jini technology is well known by those skilled in the art. Jini technology is a network architecture that enables the spontaneous assembly and interaction of services and devices on a network of computer systems. Built on the Java platform, Jini technology eliminates the challenges of scale, component integration, and ad-hoc networking encountered in distributed computing environments. Jini simplifies interactions over a network by providing a fast and easy way for clients to use available services. Jini technology is also configured to be wire-protocol and transport-protocol neutral.

Summarily, Jini network technology includes a communication and programming model that enables clients and Jini services to discover and connect with each other to form an impromptu (i.e., spontaneous) Jini community. As Jini is written in Java, Jini implements the mechanism, Java Remote Method Invocation Application Program Interface (API), to move objects around the network.

In one embodiment, a Jini service is configured to employ a proxy to move around the network. As used herein, the proxy is defined as an object having service attributes and communication instructions. Through implementing discovery and join processes, the Jini services are found and thereafter registered with a look up service on a network. As used herein, registering a service is defined as sending the service proxy to all look up services on the network or a selected subset of the look up services. By way of example, the look up service is equivalent to a directory or an index of available services wherein the proxies for each of the services and their associated code are stored. When a service is requested, the proxy associated with the requested service is sent to the requesting client, thus enabling the client to use the requested service. Once dispatched, the proxy is configured to conduct all communication between the client and the Jini service.

In providing an ad-hoc network of computers, in one embodiment, Jini introduces a concept called "leasing." That is, once a service joins the Jini network, the Jini service registers its availability for a certain period of leased time. This lease period may be renegotiated before the lease time is expired. When a service leaves the Jini network, the service entry in the look up service is removed automatically once the service's lease is expired. For further details on Jini technology, please refer to K. Arnold et al., The Jini Specification (1999) and W. Keith Edwards, Core Jini (1999).

As Jini is implemented in the Java™ (hereinafter "Java") programming language, in a like manner, an overview of Java is provided below. In operation, a user of a typical Java based system interacts with an application layer of a system generally written by a third party developer. The application layer generally provides the user interface for the system. A Java module is used to process commands received by the application layer. A Java virtual machine is used as an interpreter to provide portability to Java applications. In

general, developers design Java applications as hardware independent software modules, which are executed Java virtual machines. The Java virtual machine layer is developed to operate in conjunction with the native operating system of a particular hardware, which represents the physical hardware on which the system operates or runs. In this manner, Java applications can be ported from one hardware device to another without requiring updating of the application code.

Unlike most programming languages, in which a program is compiled into machine-dependent, executable program code, Java classes are compiled into machine independent byte code class files which are executed by a machine-dependent virtual machine. The virtual machine provides a level of abstraction between the machine independence of the byte code classes and the machine-dependent instruction set of the underlying computer hardware. A class loader is responsible for loading the byte code class files as needed, and an interpreter or just-in-time compiler provides for the transformation of byte codes into machine code.

More specifically, Java is a programming language designed to generate applications that can run on all hardware platforms, small, medium and large, without modification. Developed by Sun, Java has been promoted and geared heavily for the Web, both for public Web sites and intranets. Generally, Java programs can be called from within HTML documents or launched standalone. When a Java program runs from a Web page, it is called a " Java applet," and when run on a Web server, the application is called a "servlet."

Java is an interpreted language. The source code of a Java program is compiled into an intermediate language called "byte code". The byte code is then converted (interpreted) into machine code at runtime. Upon finding a Java applet, the Web browser invokes a Java interpreter (Java Virtual Machine), which translates the byte code into machine code and runs it. Thus, Java programs are not dependent on any specific hardware and will run in any computer with the Java Virtual Machine software. On the server side, Java programs can also be compiled into machine language for faster performance. However a compiled Java program loses hardware independence as a result.

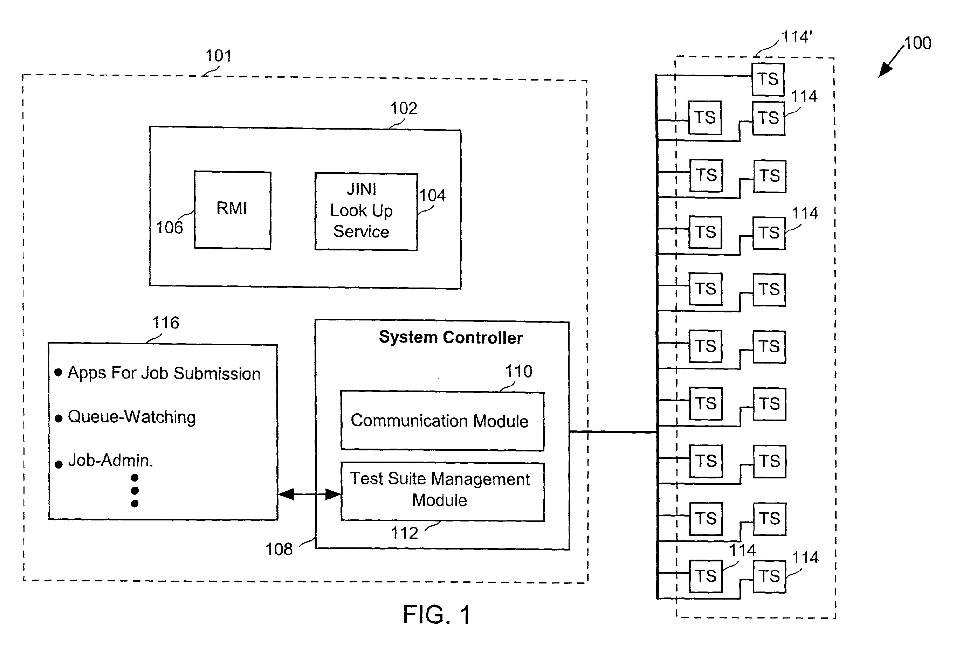

Keeping these brief overviews to Jini and Java as they relate to the present invention in mind, reference is now made to Figure 1 illustrating a block diagram of a distributed test framework (DTF) system 100, in accordance with one embodiment of the present invention. As shown, physically, the DTF system 100 includes two groups of computer systems: (1) a system server group 101, and (2) a test system group 114'. The system server group 101 includes a service component 102 and a system controller 108. The service component 102 is configured to contain a Jini look up service 104 and a Remote Method Invocation (RMI) 106. In one embodiment, the RMI is designed to handle various communication needs. Comparatively, the Jini look up service 104 is a dedicated process running on the master computer system, server, and is configured to function as a central registry. As used herein, the master computer system is defined as the computer system running the system controller 108. As designed, in one embodiment, the master computer is configured to include both the system controller 108 and the service component 102. However, in a different implementation, each of the system controller 108 and the service component 102 may be included and run by separate computer systems. As designed, the look up service 104 is configured to enable the system controller 108 to locate available computer systems of an ad-hoc network of computer systems to execute a given test execution request using the test system registerable attributes. For instance, the look up service 104 includes registerable attributes, which identify the test machine platform, operating system, and other software and hardware characteristics.

The illustrated system controller 108 includes a communication module 110 and a test suite management module 112. The communication module 110 manages the communication between the system controller 108 and the distributed test systems 114. For instance, the communication module 110 is responsible for locating available test systems 114, running test execution requests, and gathering information regarding the status of the test systems 114. In one example, the system controller 108 manages the communication with the distributed test systems 114 by implementing a plurality of threads. In this manner, the system controller 108 has the capability to communicate with a plurality of test systems 114 in parallel. However, it must be noted that in a different embodiment, the system controller 108 may implement any suitable mechanism to manage the communication between the system controller 108 and the distributed test systems 114 (e.g., Jini, RMI, Transport Commit Protocol/Internet Protocol (TCP/IP) sockets, etc.).

The test suite management module 112 is responsible for managing the processing of the submitted test suites and the test execution requests. As used herein a test suite is a comprehensive list of data files having commands specifically programmed to initiate a number of functional aspects of the software product being tested. For instance, if the software product being tested is a word processing program, the test suite may activate a spell check command, a cut test command, a paste command, etc. Thus, once the test suite is executed, the test results reveal whether any of the tested commands failed to operate as intended. Also as used herein, once submitted for processing, each test suite becomes a "test execution request." As the processing of different portions of the test suite can be assigned to different test machines, the test suites may be divided into a plurality of test execution requests (i.e., jobs).

By way of example, the test suite management module 112 maintains an inqueue directory designed to include almost all the submitted test execution requests. Once the system controller 108 is initiated, the system controller 108 is configured to read each test execution request from files held in the inqueue directory. Once a test execution request is read, it is put into either a wait queue configured to hold test execution requests waiting to be executed or an execution queue designed to hold test execution requests currently being executed. Further information regarding managing the inqueue directory, wait queue, and execution queue will be provided below. As illustrated, in one example, the test suite management module 112 is configured to manage the software applications and user interfaces implemented for job submission, queue watching, job administration, etc., as shown in 116.

The test system group 114' includes a plurality of test systems 114 having similar or diverse hardware and software configuration. Although shown as a group, the test systems 114 are not necessarily limited to testing. In fact, the test systems 114 can be computers or systems used by employees of a company for normal desktop work. So long as the test systems 114 are associated with the networked group, the processing power of these test systems 114 can be used. In one embodiment, the test systems 114 can be used during normal working ours when the test systems 114 are running, for example, business applications, or during off hours, thus tapping into potentially huge processing resources that would otherwise be left unused. It should therefore be appreciated that test systems 114 do not necessarily have to be solely dedicated to testing or processing for the system server group 101.

In one embodiment, the test systems 114 are configured to execute the test execution requests dispatched by the system controller 108. Each of the test systems 114 runs an agent process (not shown in this Figure) designed to register the respective test system 114 with the Jini look up service 104. In this manner, the agent process for each test system 114 advertises the availability of the associated test system 114. As will be discussed in further detail below, a machine service component of the agent is used to establish communication between the associated test system 114 and the system controller 108. Specifically, by implementing the Jini attributes, the machine service registers the test system 114 characteristics with the Jini look up service 104. The test system 114 attributes are subsequently used by the system controller 108 to locate a test system 114 suitable to execute a specific test execution request.

While the DTF system 100 can physically be divided into two groups, logically, the DTF system 100 is comprised of three over all parts: (1) Job submission and other user interfaces; (2) Test scheduler and system controller; and (3) Test execution on remote or local systems.

For the most part, the job submission and other user interfaces component is a job queuing system having a variety of applications and user interfaces. As designed, the job submission component is configured to perform several tasks such as handling job submission, managing queues, administrating jobs, and administrating the ad-hoc network of the distributed test systems.

By way of example, in one implementation, the user interface may be as follows:
- Launch system controller: In one embodiment, launching the system controller 108 is performed by running an appropriate shell script. As designed, the shell script is configured to launch the Jini and RMI support servers.
- Kill system controller: Finds substantially all the processes, and once found kills each of the processes, individually.
- Submit jobs: Before the system controller 108 is launched, an Extensible Markup Language (XML) formatted test-execution-request file is created in the inqueue directory (e.g., that is preferably part of the test suite management module). In this manner, once the system Controller 108 is launched, the system controller 108 scans the inqueue directory, thus entering almost each and every test execution request into the in-queue (the in-queue being an actual queue, as contrasted with the inqueue directory).
- Check queue: In one embodiment, a stopgap Graphical User Interface (GUI) is provided.
- Cancel/administer a job: In one implementation, a stopgap GUI is implemented.
- Other administrative tasks: In one exemplary embodiment, additional user interfaces are included. For instance, in certain cases, the system controller 108 is configured to implement various input files.

The second logical component, the test scheduler and system controller, includes the system controller 108 configured to perform the function of managing the job queues and dispatching the test execution requests to test system 114 for processing. Thus, the system controller 108 is configured to manage both; the wait queue (i.e., the queue containing the test execution requests waiting to be executed) and the execution queue (i.e., the queue containing test execution requests currently being executed). In one embodiment, the in-queue is analogous to the wait queue.

As designed, the test scheduler and system controller component is configured to include four modules:
- Suite MGR: This module maintains a list of the available test suites stored in a known location in the file system. As designed, the test suite descriptions are stored in an XML formatted file in a suite directory.
- Log MGR: This module is configured to handle the logging of activities inside the system controller 108 by implementing a plurality of log files having XML format. For instance, this is particularly useful for debug tracing and system statistics charting.
- Queue MGR: This module is designed to maintain the two queues, wait queue (i.e., the in-queue) and the execution queue. Specifically, while a job is in any of the queues, an XML formatted file is kept in the queue directory reflecting the current status of the job. Each test execution request is configured to have a list of attributes describing the system characteristics required to execute the test execution request.
Scheduler: This module is configured to manage the dispatch of the test execution requests from the wait queue to the execution queue. In one embodiment, a job is dispatched when (a) the time to execute the job has been reached, and (b) a test system 114 having the required characteristics is available to execute the job.

In accordance with one implementation, the requirements for a DTF system are provided below in Table 1.

**Table 1 -**

| **Client-Server Test Frame Requirements** | | | |
|---|---|---|---|
| **Requirements** | | **Accessments** | **Notes** |
| **Tool Requirements** (e.g., javatest, jtreg, tonga, shell, etc.) | | Green | |
| **Test Execution Requirements** | Clean Environment | Green | |
| | Setup | Green | |
| | Execute test suite | Green | |
| | Post-processing | Red | In one example, there are no post actions. |
| | Get test results | Green | |
| | Clean Environment | Green | |

| **Other Requirements** | | | |
|---|---|---|---|
| Error Handling | Crashing | Yellow | In one example, a method is |
| | Hanging | Yellow | implemented to stop the system. |
| Notification (When done) | | Green | |
| Machine Requirements (MKS, Patches) | | Green | |
| Test Suites Available | | Yellow | In one example, a suite path is passed through a plurality of command arguments |
| JDKs Available | | Yellow | In one embodiment, java.exe is in the path environment. |
| Machine Use Detection | | Red | |
| Queue Test Suites | | Red | |

| **GUI Requirements** | | | |
|---|---|---|---|
| Machine Characteristics Matrix | | Red | |
| Result Comparison | | Red | |
| Golden JDK results | | Red | |
| Stop/Destroy Test | | Green | |
| User Profiles/Managements | | Red | |
| Logs | | Green | |
| Test Result Notification | | Red | |
| Scheduling Test | | Red | |
| Machine Statistics (Idle time, Usage Profile) | | Red | |
| Error Recovery (Net Problems) | | Red | |
| Fault Tolerant | | Yellow | In one example, fault tolerant is performed by a plurality of actions based on coordination protocol, thus minimizing faults. |
| Scaleable | | Green | In one embodiment, test suites can be easily added or deleted. |
| Demon Requirements | Version # (Compatibility) | Red | |
| | | | |
| | Machine Descriptions | Yellow | In one example, Demon Requirements are the basic configurations (e.g., OS, version, etc.). |

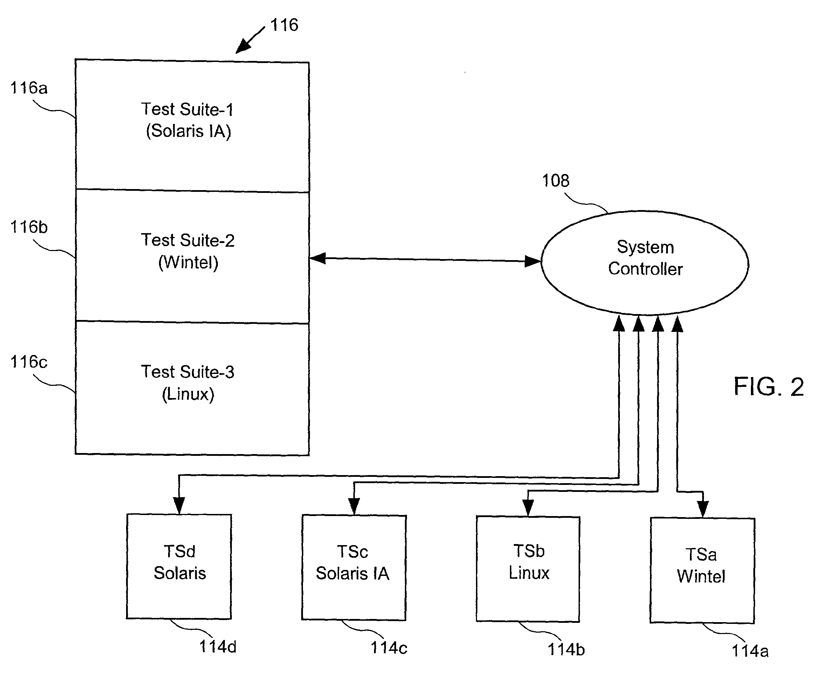

Reference is made to a block diagram depicted in Figure 2 wherein the capability of the DTF system to intelligently locate a test system 114 available to execute a test suite is illustrated, in accordance with one embodiment of the present invention. As shown, an inqueue directory 116 contains a plurality of test execution requests 116a, 116b, and 116c. In accordance with one embodiment of the present invention, once the system controller 108 is initiated, the system controller 108 is designed to read each test execution request 116a-116c contained within the inqueue directory 116. As shown, each test suite request 116a-116c must be executed by a test system 114 capable of running the test execution request requirements. For instance, each of the test execution requests 116a, 116b, and 116c must be run on a Solaris IA™ test system, a Wintel™ test system, or a Linux™ test system, respectively. As will be described in more detail below, the DTF system 100 has the capability to advantageously locate an available test system from a plurality of ad-hoc network of test systems 114a, 114b, 114c, and 114d to execute each of the test execution requests 116a-116c.

As shown in the embodiment depicted in Figure 2, each of the test systems 114a-114d has a different software and hardware configuration. For instance, while the test system 114a is run on Wintel™ and the test system 114b is run on Linux™, the test systems 114c and 114d are programmed to run on Solaris IA™ and Solaris™, respectively. As will be discussed in more detail below, the machine service for each test system 114a-114c registers the respective test system 114a-114c with the Jini look up service using the Jini attributes. Particularly, the embodiments of the present invention are configured to register the hardware and software configuration for each test system 114a-114d with the Jini look up service 104. In this manner, the system controller 108 can search the Jini look up service 104 implementing the test execution request requirements as search criteria. Thus, as shown in the example of Figure 2, the system controller 108 of the present invention selects the test systems 114c, 114a, and 114b to execute the test suite requests 116a-116c, respectively.

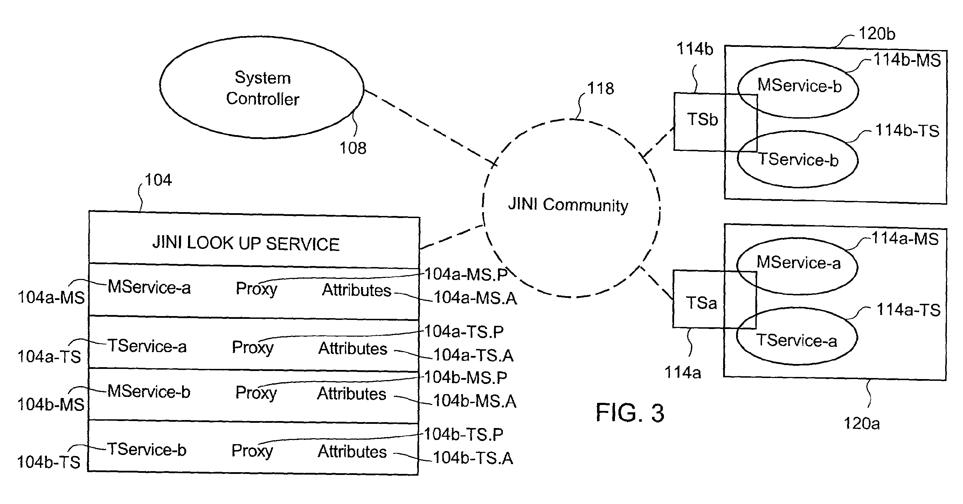

Implementing the test system attributes to locate a suitable test system to run a test execution request can further be understood with respect to the block diagram shown in Figure 3, in accordance with one embodiment of the present invention. As shown, the test systems 114b and 114a, the system controller 108, and the Jini look up service 104 communicate to each other using Jini. In one example, the system controller 108, the Jini look up service 104, and the test systems 114a and 114b and all the other resources that are Jini enabled form a virtual Jini community 118.

As shown, the test system 114a runs an agent process 120a responsible for notifying the Jini look up service 104 of the existence and configuration of the test system 114a. In one example, the agent 120a is also designed to export a downloadable image of itself. Beneficially, the downloadable image allows the system controller 108 to ask the test system 114a to initiate running a test execution request while interacting with the test system 114a as the test execution request is being processed.

The illustrated agent 120a involves two Jini services, machine service 114a-MS and test service 114a-TS. The function of the machine service 114a-MS is to advertise the availability of the test system 114a, the characteristics of the test system 114a, and the ability of the test system 114a to launch a test execution request. Additionally, the machine service 114a-MS is designed to be present on the test machine 114a at all times. As such, the machine service 114a-MS is initiated on the test system 114a at the start-up time and is configured to remain active on the test system 114a until the test system 114a is shut down.

Comparatively, the test service 114a-TS is a module configured to encapsulate the test execution request. As designed, the test service 114a-TS is spawned by the machine service 114a-MS and is subsequently launched when the machine service 114a-MS receives a request to start running a test execution request from the system controller 108. Specifically, the new test service 114a-TS is spawned based on the test execution request type. By way of example, in one embodiment, the machine service 114a-MS spawns separate test systems 114a-TS when running Tonga-type, JCK-type, JTREG-type, and shell-type test suites. However, one having ordinary skill in the art must appreciate that in a different example, the machine services are configured to spawn other suitable test systems. As shown, similar to test system 114a, the test system 114b is configured to include an agent 120b designed to include a machine system 114b-MS and a test system 114b-TS.

As will be discussed in more detail below and as shown in the implementation of Figure 3, the machine service 114a-MS and test service 114a-TS, respectively, register Jini attributes 104a-MS.A and 104a-TS.A of the test system 114a with the Jini look up service 104. For instance, in one embodiment, the sequence of events in registering the machine service 114a-MS and test service 114a-TS may be as follows: Once the test-system 114a discovers and joins the Jini community 118, the test service 114a-MS of the test system 114a registers with the Jini look up service 104. In this manner, the machine service 114a-MS registers a machine service proxy 104a-MS.P and the attributes 104a-MS.A of the machine service 114a-MS with the look up service 104. The Jini attributes 104a-MS.A are then used by the system controller 108 to locate a test service having attributes suitable to run the test execution request.

Once the test system 114a has been selected to run the test execution request, the machine service 114a-MS spawns a test service 114a-TS having the same type as the test execution request. As discussed above, the machine service 114a-MS is configured to spawn a matching test service 114a-TS for each test execution request type. For example, the test system 114a may have the attributes to run a Tonga test execution request and a JTREG type test execution request. In such a situation, the Jini look up service 104 will include two test services each running a different type of test execution request. As a consequence, when the processing of one type of test execution request has concluded, the test service 114a-TS having substantially the same type can be terminated. Thus, for the most part, the test service 104a-TS, 104a-TS.A, and 104-TS.P are designed to substantially exist while the test system 114a is running a test execution request. In this manner, the system controller 108 can determine whether the test system 114a is processing a test execution request. Specifically, this is achieved by the system controller 108 simply querying the Jini look up service 104 as to whether the test system 114a has an associated existing test service.

In addition to registering the attributes 104a-MS.A and 104a-TS.A, the machine service 114a-MS and the test system 114a-TS are configured to respectively register a corresponding machine service proxy 104-MS.P and a respective test service proxy 104-TS.P with the Jini look up service 104. As designed, the system controller 108 implements the machine service proxy 104-MS.P and the test service proxy 104-TS.P to communicate with the test system 114a. Particularly, once the system controller 108 has selected the test system 114a to run the test execution request, the system controller 108 downloads the machine service proxy 104-MS.P from the Jini look up service 104. Once the machine service proxy 104-MS.P is downloaded, the system controller 108 starts communicating with the machine service proxy 104-MS.P rather than communicating directly with the corresponding test system 114a or the machine service 114a-MS.

In a like manner, the test service proxy 104-TS.P is the communication channel between the system controller 108 and the test service 114a-TS. Thus, similar to the machine service 114a-MS, the system controller 108 downloads the test service proxy 104-TS.P from the Jini look up service 104. Thereafter, the system controller communicates with the test service proxy 104-TS.P as if communicating with the test system 114a or the test service 114a-TS. As shown, in the same manner, the machine service 114b-MS and test service 114b-TS register their respective machine service proxy 104b-MS.P and machine service attributes 104b-MS.A as well as the respective test service proxy 104b-TS.P and test service attributes 104b-TS.A with the Jini look up service 104.

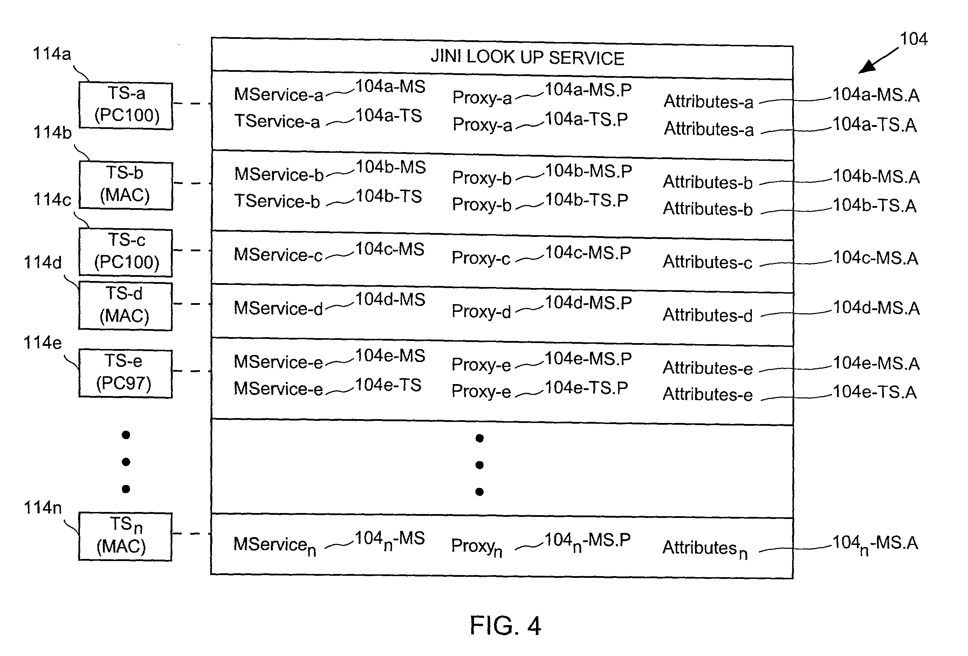

The capability of the present invention to determine the availability of a test system to process a test execution request having a set of specific requirements can further be understood with reference to the block diagram of Figure 4, in accordance to one embodiment of the present invention. As illustrated, a plurality of test systems 114a-114n respectively being a PC 100, Macintosh, PC 99, Macintosh, PC 100, and Macintosh are registered with the Jini look up service 104. That is, for each test system 114a-114n, the Jini look up service 104 contains an associated machine service 104a-MS to 104n-MS. In a like manner, for each machine service 104a-MS to 104n-MS, the Jini look up service 104 includes a corresponding machine service proxy 104a-MS.P to 104n-MS.P and the associated machine service attributes 104a-MS.A to 104n-MS.A.

Although for each test system 114a-114n a machine service entry can be found in the Jini look up service 104, only test systems 114a, 114b and 114e have associated test services 104a-TS, 104b-TS, and 104e-TS. Further more, as shown, for each of the test systems 114a, 114b and 114e, the Jini look up service 104 includes the corresponding test system proxy 104a-TS.P, 104b-TS.P, and 104c-TS.P and the respective test system attributes 104a-TS.A, 104b-TS.A, and 104c-TS.A. In one embodiment, having associated test systems in the Jini look up service are the indications of the busy status of the test systems 114a, 114b, and 114e, respectively.

For instance, at this point, when the system controller 108 receives a test execution request requiring to be processed by a PC 100, the system controller 108 searches for an available PC 100 test system. While searching the Jini look up service 104, the system controller 108 will first locate the machine service 104a-MS. Despite machine service 104a-MS having the required attribute (i.e., being a PC 100), the system controller 108 will have to by pass this entry, as the test system 114a is busy. The system controller 108 detects the unavailability of test system 114a by the Jini look up service 104 including the test service 104a-TS associated with the test system 114a. Subsequently, in search of the next available PC 100 test system, the system controller locates machine service 104c-MS. However, this time, the Jini look up service does not include a test system associated with the test system 114c, revealing the test system 114c availability to execute the test execution request.

As will be discussed in more detail below, in one implementation, the lack of a corresponding test service in the Jini look up service 104 occurs once the test execution request has concluded and the test service 104a-TS lease with the Jini look up service 104 has expired. Thus, once the test service 104a-TS and its associated proxy 104a-TS.P and attributes 104a-TS.A have been removed from the Jini look up service 104, the test system 114a can then be selected to execute a different test execution request. Depending on the type of the test execution request, a different or the same type of test service 114a-TS is spawned by the machine service 114a-MS, again indicating the busy status of the test system 114a.

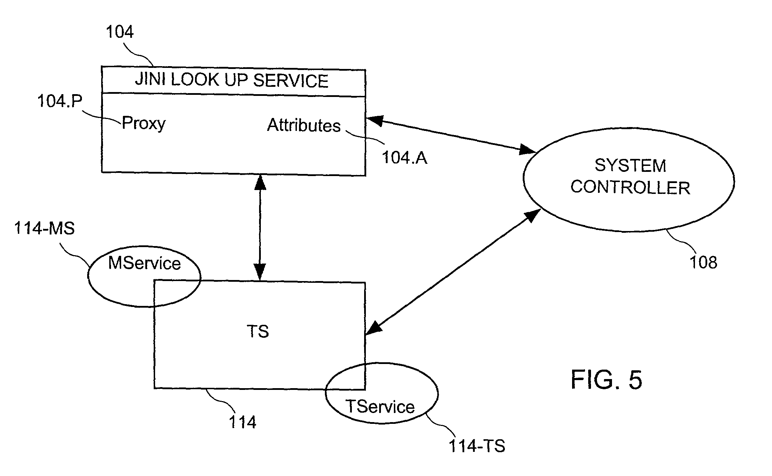

Reference is now made to Figure 5 depicting the one-to-one communication between the system controller 108, Jini look up service 104, and test system 114 of the DTF system, in accordance with one embodiment of the present invention. As shown, enabled by the Jini technology, a machine service 114-MS component of the test system 114 discovers the Jini look up service 104. Thereafter, the machine service 114-MS joins the Jini look up service 104 by registering a plurality of Jini attributes 104-MS.A and a machine system proxy 104-MS.P with the Jini look up service 104.

Seeking a test system to execute a given test execution request, the system controller 108 discovers the Jini look up service 104. Subsequently, the system controller 108 searches the Jini look up service 104 for a test system suitable to run the test execution request. Once the system controller 108 has determined that the machine service attributes 104-MS.A of the test system 114 matches to that required to run the test execution request, the system controller 108 downloads the machine service proxy 104-MS.P from the Jini look up service 104. From then on, the system controller 108 starts communicating with the machine service proxy 104-MS.P as if communicating with the machine service 114-MS. At this point, the system controller 108 communicates with the machine service proxy 104-MS.P requesting the execution of the test execution request.

Subsequent to receiving this request, the machine service 114-MS spawns a test service 114-TS which type matches that required by the test execution request. Next, a test service proxy 104-TS.P and a set of test service attributes 104-TS.A of the test service 114-TS are then registered with the Jini look up service 104. Thereafter, the system controller 108 downloads the test service proxy 104-TS.P and communicates with the test system proxy 104-TS.P as if communicating with the test system 114-TS. Then, the test service 114-TS receives the test execution command from the system controller 108, thus initiating the test execution request.

As was discussed in more detail above, once the test execution has concluded, the test service 114-TS lease with the Jini look up service 104 expires, thus triggering the removal of the test system proxy 104-TS.P and test system attributes 104-TS.A from the Jini look up service 104. In this manner, the system controller 108 associates the availability of the test system 114 to run the next test execution request with the test system 114 lacking of a registered test service proxy 104-TS.P.

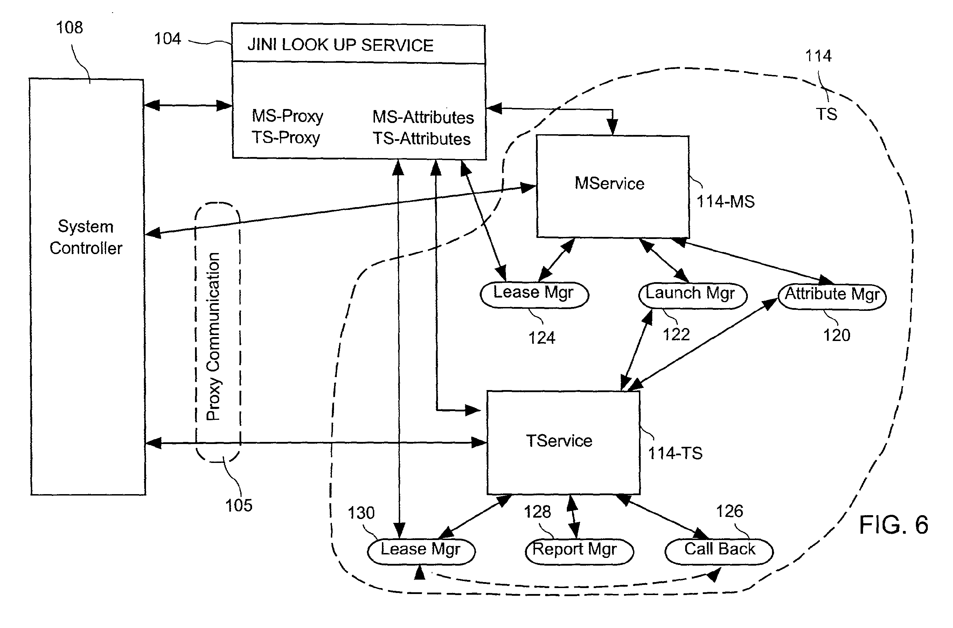

Proceeding to the block diagram of Figure 6, the interaction between the Jini look up service 104, system controller 108, and test system 114 can further be understood, in accordance with one implementation of the present invention. As discussed in more detail above, the test system 114 includes a machine service 114-MS and a test service 114-TS. As designed, the machine service 114-MS includes a lease manager 124, a launch manager 122, and an attribute manager 120 while the test system 114-TS includes a call back 126, a report manager 128, and a lease manager 130.

In one example, the interaction between the DTF system components starts by the test system 114 discovering the Jini look up service 104. Subsequent to this discovery, the machine service 114-MS communicates with the attribute manager 120, obtaining the test system 114 attributes. Thereafter, the machine service 114-MS joins the Jini look up service 104 by registering the machine service 114-MS proxy and machine service attributes with the Jini look up service 104. As part of registering the machine service 114-MS with the look up service 104, the lease manager 124 leases the machine service 114 for a specific period of time. That is, the lease manager 124 registers the availability of the test system 114 to execute a test execution request for a specific period of time. However, before the leased period is expired, the lease manager 124 can renew the lease with the Jini look up service 104. In this manner, once the test system 114 is removed from the ad-hoc network of the distributed test systems, the machine service proxy, machine service attributes, test service proxy, and test service attributes are automatically removed from the Jini look up service 104 as soon as the lease is expired.

At this point, the system controller 108 scans the inqueue directory, reading the required attributes for running the first test execution request in the in-queue (i.e., the wait queue). The system controller 108 then searches the Jini look up service 104, looking for a test system having attributes matching to that required by the test execution request (or computer process) to be processed. Once the system controller 108 determines that the test system 114 is a suitable test system to run the test execution request, the system controller 108 downloads the machine service proxy for the test system 114 from the Jini look up service 104. As shown in the embodiment of Figure 6, once the machine service proxy is downloaded, the system controller 108 use the proxy communication 105 to communicate with the machine service proxy as if communicating with the test system 114. At this point, the test execution is initiated by the system controller 108 dispatching a start execution request to the machine service 114-MS.

Once the launch manager 122 component of the machine service 114-MS receives the system controller 108 request to start test execution, the launch manager 122 spawns the appropriate test service 114-TS. Specifically, the test service 114-TS type spawned by the launch manager 122 is determined by the test execution request requirements dispatched by the system controller 108. Irrespective of the test service 114-TS type, the lease manager 130 of the test system 114-TS is configured to register the test system attributes and a test system proxy with the Jini look up service 104. Again, like the machine service 114-MS, the test service 114-TS registers its availability to execute the test execution request with the Jini look up service 104 for a specified lease period. At this point, the system controller 108 downloads the test service proxy from the Jini look up service 104 and communicates with the test system proxy as if the system controller 108 is communicating with the test service 114-TS.

Once the test service 114-TS starts executing the job, the test service 114-TS sends an event to the system controller 108 indicating the commencement of the test execution request processing. In one embodiment, the test service 114-TS is designed to send additional events during the running of the test execution request and upon its conclusion. At the conclusion of running the test execution request, the call back component 126 is configured to communicate with the lease manager 130 signaling the conclusion of processing the test execution request. Once the lease manager 130 receives such communication, the lease manager 130 communicates with the Jini look up service 104 signaling the expiration of the test suite 114-TS lease with the Jini look up service 104. Upon the expiration of the test suite 114-TS lease with the Jini look up service 104, the test suite 114 proxy and test suite 114 attribute entries are removed from the Jini look up service 104, thus pointing out the availability of the test system 114 for processing another suitable job.

The test result data generated by the processing of the test execution request are collected, categorized, and maintained by the report manager 128. In one embodiment, the report manager 128 analyzes and generates a test report implementing the test result data. Thus, in one embodiment of the present invention, the test systems 114 of the DTF system generate test reports using the results generated by the processing of an associated test execution request. However, in a different embodiment, the test results generated by each test system 114 may be utilized so as to create a test result summary report, covering the test results produced by each of the test systems 114.

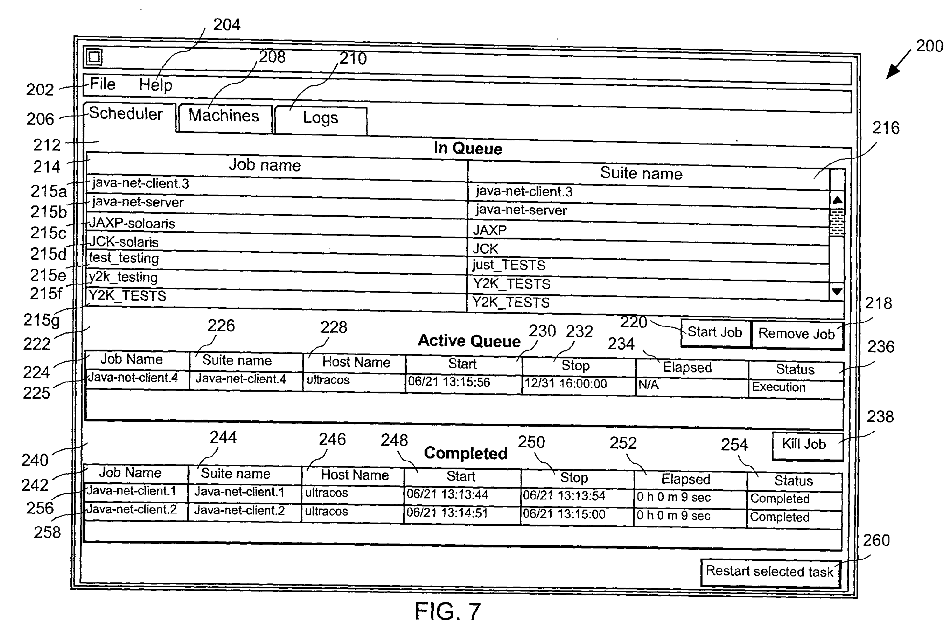

User interfaces implemented in test execution request submission, test execution request scheduling and execution, and managing the ad-hoc network of the distributed resources can further be understood with reference to a DTF utility graphical user interface (GUI) 200 illustrated in Figure 7, in accordance with one embodiment of the present invention. As shown in the example of Figure 7, the DTF utility GUI 200 may include a tool bar 201 containing a plurality of pull down menus such as "File" 202 and "Help" 204. As further illustrated, in one implementation, the DTF utility GUI 200 enables a user of the master computer system (i.e., the server) to monitor and obtain information regarding different components of the DTF system. For instance, in the embodiment of Figure 6, the DTF utility GUI 200 is configured to provide information regarding the status of a scheduler 206, machines 208, and logs 210 components of the DTF system. However, in a different embodiment, the DTF utility GUI 200 may provide the user with the real-time status of any of the components of the DTF system.

The scheduler 206 shown in the DTF utility GUI 200 is configured to gather and maintain data in a temporary data holding place such as a queue. In one embodiment, the scheduler 206 keeps track of the status of the submitted test execution requests by maintaining an in-queue 212, an active queue 222, and a completed queue 240. The exemplary in-queue 212 includes a job name field 214 and a suite name field 216 for maintaining job name and the corresponding test suite name for each job entry 215a-215g. As shown, while job names for job entries 215a and 215b are substantially identical to the corresponding test suite name for job entries 215a and 215b, job names for the job entries 215c-215g are not identical to the test suite names for the job entries 215c-215d. For the most part, this occurs because for execution purposes, a test suite may be divided into test execution requests (i.e., jobs) expediting the processing of the test suite.

In one embodiment, to reduce the extent of human interaction, the test execution requests are submitted to the DTF system through the system controller 108. Specifically, once the system controller 108 is initiated, the system controller 108 is configured to scan the XML files within the inqueue directory and then read the XML files including a "testrequest" tag. Then, these test execution requests and their test suites are used to initialize the in-queue 212. However, one of ordinary skill in the art must appreciate that in a different implementation, any appropriate mechanism may be used to place the test execution requests into the in-queue 212.

As shown, the DTF utility GUI 200 provides the user of the master computer system (i.e., the server) the capability to initiate the processing of any of the job entries 215a-215g using a start job button 220. Similarly, the user of the master computer system is given the opportunity to delete any of the job entries 215a-215g and their associated suite names through implementing a remove job button 218.

While in-queue 212 contains the test execution requests waiting to be executed by the suitable test system, the active queue 222 contains the test execution requests currently being executed. As illustrated, the active queue 222 implements a plurality of fields such as job name 224, suite name 226, host name 228, start 230, stop 232, elapsed 234, and status 236 to monitor the jobs during the execution. Thus, in the depicted example, a job entry 225 having a job name "java-net-client 4" and a suite name "java-net-client 4" started executing on 13:15:56 on 06/21 and is configured to be executed until 16:00:00 on 12/31. As shown, the status 236 for the job entry 225 indicates that the job entry 225 is in "execution" by the test system "ultracos." Similar to the in-queue 212, the active queue 222 provides a master computer user an opportunity to terminate the execution of the jobs by pressing a kill job button 238.

In a like manner, the completed queue 240 contains a plurality of fields, job name 242, suite name 244, host name 246, start 248, stop 250, elapsed 252, and status 254 field configured to collect and maintain data concerning the status of completed jobs. As indicated in the status 254 field for both job entries, the execution of a job entry 256 and a job entry 258 has concluded. Also, as depicted, the elapsed time for each job entry 256 and 258 is shown to be about 9 seconds. Again, a restart selected task 260 button is configured to provide the user of the master computer service the opportunity to re-run the completed job. Thus, in one embodiment, by selecting a completed job, while pressing a restart selected task button 260, the completed job will be removed from the completed queue 240 and is placed in the inqueue 212. In this manner, the completed job can be run again.

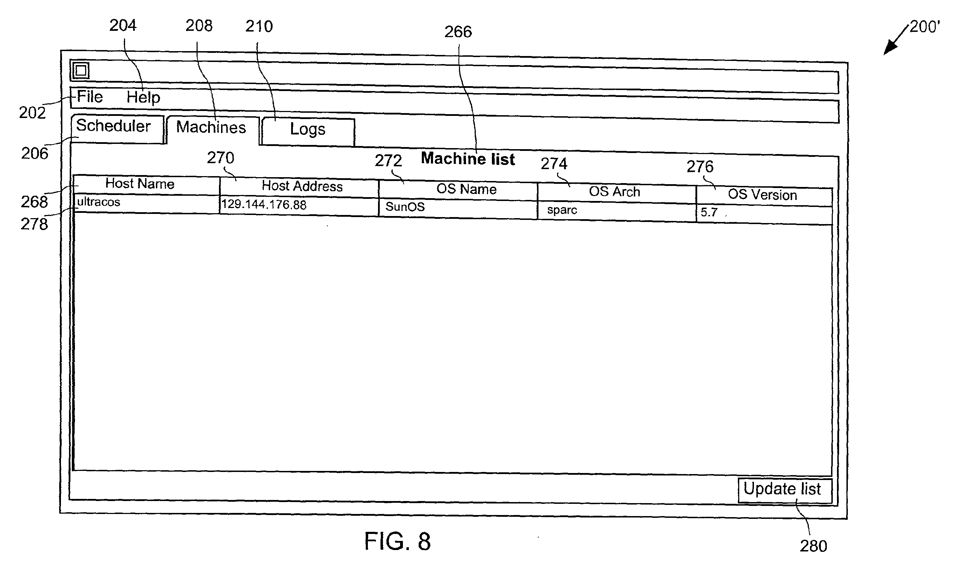

A DTF utility GUI 200' depicting in Figure 8 provides information regarding the status of machines 208 of the DTF system, in accordance with one embodiment of the present invention. Specifically, the DTF utility GUI 200' is configured to provide a list of test machines creating the impromptu Jini community of test systems. The machines list 266 includes a plurality of fields such as host name 268, host address 270, operating system (OS) name 272, OS architecture 274, and OS version 276. For instance, in the embodiment illustrated in Figure 7, the machine list 266 includes one machine entry 278 having a host name "ultracos," and a Java™ binary host address 129,144,176.88. Additionally, as shown, the machine entry 278 has a version 5.7 Sun™ solaris operating system with a Sparc architecture. The illustrated DTF utility GUI 200' also provides the master computer user an update list 280 button, giving the user the opportunity to update the status of the machines list 266, when needed or if necessary.

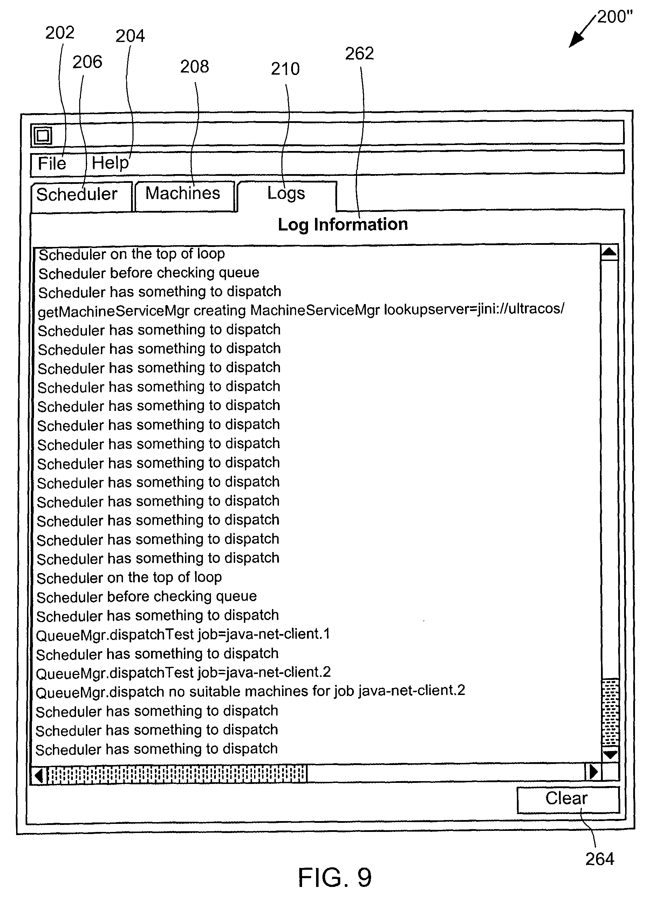

Reference is now made to DTF utility GUI 200" illustrating the contents of the logs 210 component of the DTF system, in accordance with one embodiment of the present invention. As shown, the logs 210 component includes a list entitled a DTF log information 262. For instance, in the implementation depicted in Figure 9, the logs 210 component is configured to maintain a list of certain actions performed by some of the DTF system components (e.g., scheduler, machine service lookup service, etc.).

It must be noted that as designed, the DTF utility can be implemented on master computer systems (i.e., servers) having different platforms and environments. For instance, in one implementation, the DTF utility may be run in a Windows™ environment, and be launched by using the Programs submenu of Windows™ Start menu.

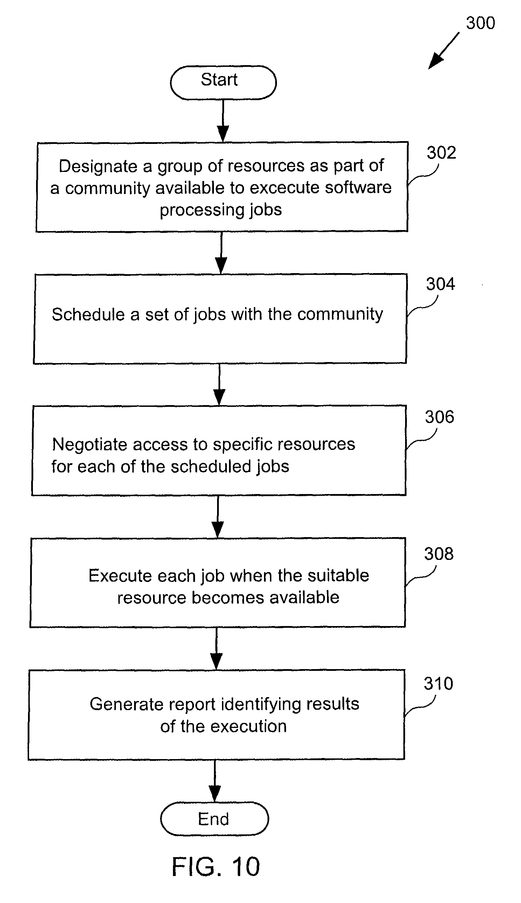

Reference is now made to a flow chart diagram 300 of Figure 10 illustrating a method operations implemented to execute a process by the distributed processing framework system, in accordance with one embodiment of the present invention. The method begins in operation 302 in which a group of resources (e.g., processing resources) as part of a community available to execute software processing jobs is designated. In one embodiment, this task is achieved by the group of resources joining a look up service implementing a proxy and a set of attributes associated with each of the resources. By way of example, the group of resources may include a plurality of ad-hoc networked computer systems, which register with Jini look up service, indicating their availability to execute a software process job. In one implementation, computer systems are test systems configured to process a test execution request (e.g., a job). Each of the test systems registers with the Jini look up service using a machine service designed to have a proxy and a set of attributes.

Proceeding to operation 304, the processing of a set of jobs is scheduled with the resources of the community. In one embodiment, each of the software processing jobs contained within the inqueue directory are scanned and depending on availability of a resource to execute the software processing job, is read either into a wait queue or an execution queue. Next, in operation 306, access to specific resources are negotiated for each of the scheduled jobs. That is, a system controller searches the look up service seeking an available resource having the attributes substantially similar to that required by the software processing job. Once such resource has been located, the system controller communicates with the resource by obtaining machine service proxy associated with the located resource.

Next, in operation 308, each of the scheduled jobs is executed when a suitable resource becomes available. That is, after obtaining the proxy from the look up service, the system controller dispatches a software processing job execution request, initiating the processing of the software processing job. In one embodiment, when executing a test execution request, the machine service spawns a process service configured to include a proxy and a set of attributes. In a DPF system, the process service is a test system and once spawned, the test service proxy and the attributes are registered with the Jini look up service. At this point, the system controller obtains the proxy so as to initiate the test execution request. Next, in operation 310, a report identifying the results of the process execution is generated.

Thus, beneficially, the distributed processing framework allows a software process be executed by a group of ad-hoc network of processing resources such that substantially minimum administration is required. In this manner, adding and deleting of resources have almost minimum effect on the execution of a software processing job.

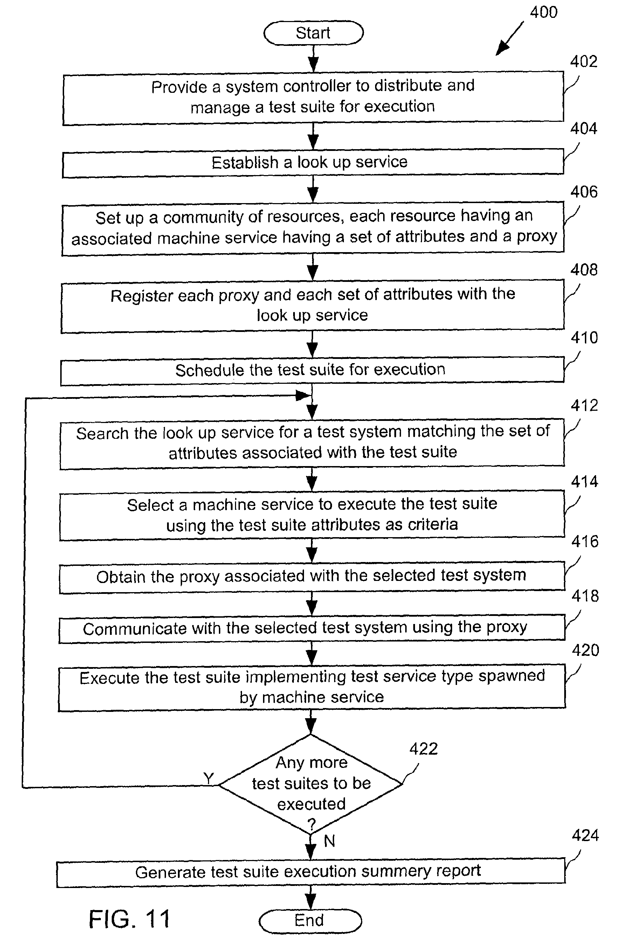

The method operations implemented in executing a test suite by the distributed test framework system is shown in a flow chart diagram 400 illustrated in Figure 11, in accordance with one embodiment of the present invention. The method begins with operation 402 in which a system controller to distribute and manage a test suite submitted for execution is provided. As discussed in more detail above, the system controller maintains a suite directory wherein the description of each test suite is kept in an XML formatted file. Next, in operation 404 a look up service configured to perform the function of a network device registry, directory service, or a registry service is established. In one embodiment the look up service is a Jini look up service designed to function as a dedicated process running on a particular computer system. For instance, the Jini look up service may be run on the system server, which includes the system controller.

Subsequently, a community of resources is set up in operation 406. Each of the resources is configured to include an associated machine service designed to have a set of attributes and a proxy. For instance, in one embodiment, the resources are test systems having similar or dissimilar software and hardware configuration. The test systems software and/or hardware configuration are registerable attributes, which are used by the system controller to locate and select an available suitable test system.

Proceeding to operation 408, each proxy and each set of attributes are registered with the look up service. In operation 410, the test suite is scheduled for execution. For instance, each of the test suites stored in the XML formatted inqueue directory are read by the system controller and placed in an in-queue queue. Next, in operation 412, the look up service is searched for a test system having attributes matching the set of attributes associated with the test suite to be executed. Continuing to operation 414, a machine service is selected to execute the test suite using the test suite attributes as criteria. Thereafter, in operation 416, the proxy associated with the selected test system is obtained. In one embodiment, this task is achieved by the system controller downloading the selected test system proxy.

Moving to operation 418, the proxy is used to communicate with the test system. For instance, the system controller communicates with the selected test system proxy as if communicating with the test system. In one implementation, the system controller dispatches a test execution request to the proxy, initiating the test suite execution. The test suite is next executed implementing the test service type spawned by the machine service. In one example, the machine service spawns the test service configured to have a test service proxy and the set of attributes. Once spawned, the test service proxy and the set of attributes are registered with the Jini look up service, indicating the unavailability of the test machine to execute a test suite requiring similar configuration. Continuing to operation 422, a determination is made as to whether there are any more test suites to be executed. If a determination is made that more test suites exist to be executed, the method continues to operation 412 in which the look up service is searched for a test system having attributes matching to that required by the test suite being executed. However, if it is determined that all the test suits have been executed, the method moves to operation 422, in which a test suite execution summary report is generated.

### II. System Controller for Use in a Distributed Processing Framework System

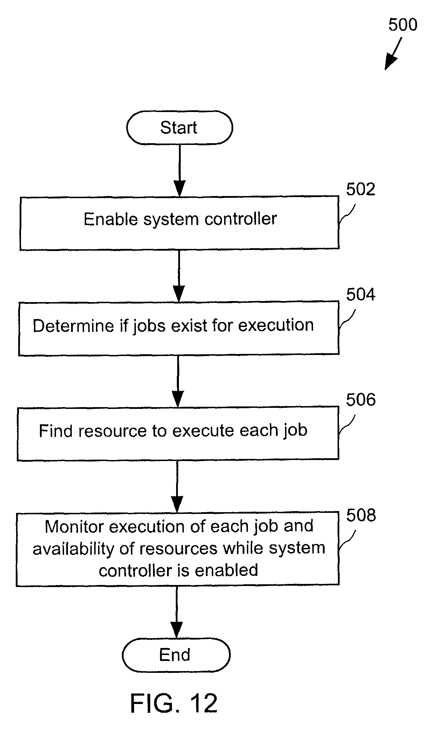

With the distributed processing framework system description in mind, reference is now made to Figure 12 illustrating a flow chart diagram 500 of a method operations implemented by a system controller of a DPF system, in accordance with one embodiment of the present invention. The method starts in operation 502 in which the system controller is enabled. In one embodiment, this occurs by launching of the system controller and thereafter scanning and reading each job file in a directory. By way of example, the system controller scans and reads the XML formatted job files stored in the inqueue directory. Once read, each of the XML formatted files is used to initialize a job file waiting to be processed in the in-queue queue. In one instance, each of the job requests (i.e., jobs) includes the software/hardware configuration required to execute the job request as well as the set of attributes required of the system resources.

Continuing to operation 504, a determination is made as to whether there are any jobs to be executed. Specifically, the system controller determines whether any jobs exist in the in-queue queue. Once it is determined that a job request to be executed exist, the system controller proceeds to operation 506 in which a processing resource is found to execute each job request. In one instance, the system controller searches the look up service for a processing resource (i.e., system resource) having the configuration and attributes required to process each of the jobs. In one particular example, the system controller is capable of finding such a processing resource by using the proxies and attributes of each processing resource as registered with the Jini look up service. The system controller searches the Jini look up service looking for a system resource having attributes matching to that required by each of the job requests.

Subsequent to finding such a system resource and while the system controller is enabled, in operation 508, the execution of each job as well as the availability of resources is monitored. By way of example, once the system controller finds a suitable processing resource to execute the job request, the system controller obtains the machine service proxy associated with the selected system resource and starts communicating with the machine service proxy as if communicating with the system resource itself. At this point, the system controller communicates with the machine service proxy to start executing the job request. The machine service then spawns a process service having a process service proxy and attributes, which are then registered with the Jini look up service. Similar to the machine service proxy, the system controller obtains the process service proxy from the Jini look up service and starts communicating with the process service proxy as if communicating with the process service itself.

Subsequent to submitting the job request, the system controller searches the look up service looking for an available and suitable system resource to execute the remaining jobs in the in-queue queue. In one example, the system controller determines whether a system resource is available to execute a job request by deciding whether the process resource has an associated process service in the Jini look up service. As described in more detail above, once the process service concludes the execution of the job request, the process service proxy and attributes are removed from the Jini look up service indicating the availability of the system resource to execute a job request having attributes matching to that of the process service attributes. In one instance, the system controller is enabled as long as the master computer service is on and running. As designed, in one exemplary embodiment, the system controller can run until the master computer service is rebooted. In a different example, the system controller can run until substantially all the test execution requests have been executed.

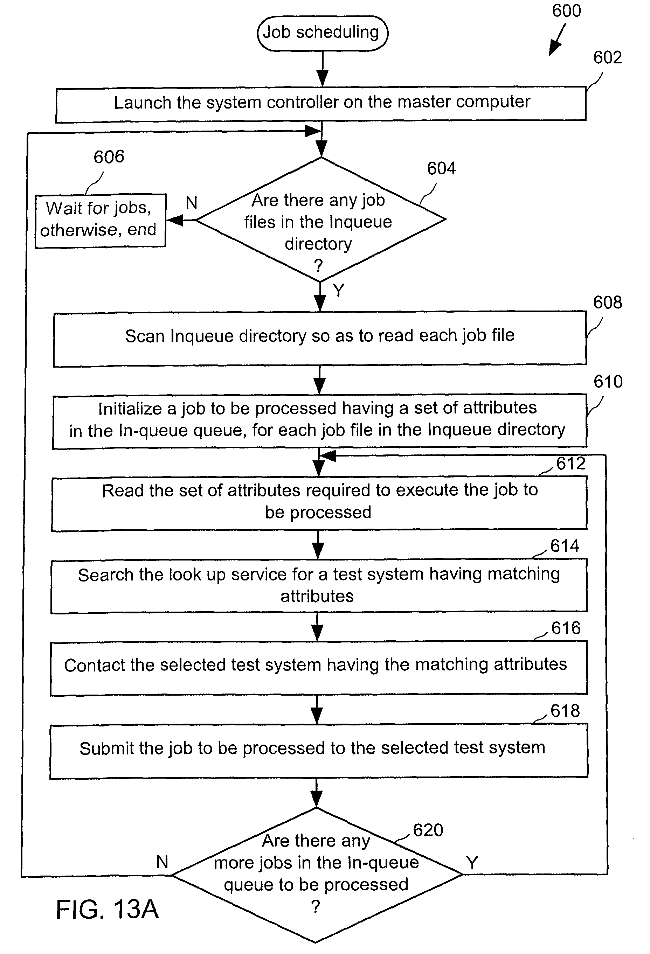

Reference is now made to a flow chart diagram 600 illustrated in Figure 13A depicting the method operations performed by a system controller to schedule jobs, in accordance with one embodiment of the present invention. As shown, the method begins in operation 602 in which the system controller is launched on the master computer. As described above, in one instance, the Jini look up service and the system controller may both be running by one computer system (i.e., the master computer) while in a different embodiment, separate computer systems may be implemented to individually run the Jini look up service and the system controller. In either situation, the computer system implemented to run the system controller is designated as the master computer system.

Furthermore, in one example, when the system controller is launched, a "Controller.main" method is called to initialize the system controller. In a different example, where the system controller is given an arbitrary name such as "DTF", the system controller can be started using a runDTF script. As will be discussed in more detail below, the system controller includes a plurality of runtime configuration parameters as shown in a configuration file in Table 2. As designed, the runController script is designed to reference the configuration file.

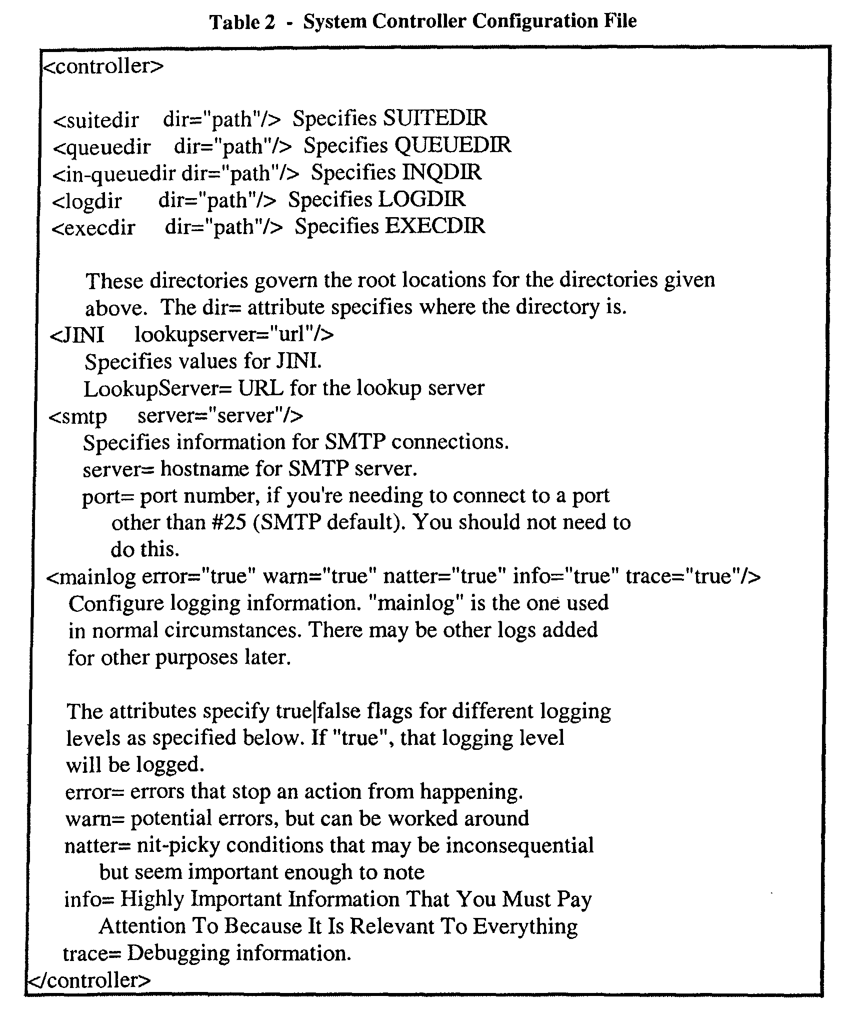

By way of example, in a Solaris environment, the system controller is started by first configuring the DTF system controller. That is, an empty system controller work directory such as:
/home/user/DTF_ws
is created. For instance, this directory is configured to include test suites, reports, test execution queues, etc. Next, the
/home/user/DTF/config.xml
file should be modified as shown in Table 3.

**Table 3 -**

| **Configuring DTF System Controller** | | |
|---|---|---|
| 1 | As designed, In one example, the SUITEDIR and INQUEUEDIR are created manually while the other directories are created by the DTF system controller. | <suitedir dir="/home/user/knightDTF-ws/suites"/> <queuedir dir="/home/user/DTF-ws/queues"/> <in-queuedir dir="/home/user/DTF-ws/in-queue"/> <logdir dir="/home/user/DTF-ws/logs"/> <execdir dir="/home/user/DTF-ws/exec1"/> <winexecdir dir="Y:/DTF-ws/exec1"/> |
| 2 | Determine which Solaris machine is to be implemented as the lookup service (e.g., longpier). | <JINI lookupServer="JINI://longpier/"> |
| 3 | | In one example, the rest of the directories can be kept as default directories. |

In a different embodiment, when running a Win32 computer system, a parent directory of the work directory is designed to be mapped to the "Y:" drive.

In accordance to a different embodiment, the system controller can be started by first calling the runController.ksh method. As shown in Table 4, the runController.ksh requires two arguments:

**Table 4 -**

| **Starting the System Controller** | | |
|---|---|---|
| 1 | This is the Java Home for the system controller. As designed, it is not required to be the test target jdk. | example: /home/user/jdk1.3/solaris.ri |
| 2 | This is the host name in which the look up service is running. | example: longpier |

Once launched, in operation 604, a determination is made as to whether there are any job files in the inqueue directory. If it is determined that there are no job files currently waiting in the inqueue directory, the method continues to operation 606 in which the system controller waits for additional job files being stored into the inqueue directory and if such event does not occur, the method ends. However, if it is determined that the inqueue directory includes job files to be processed, the method proceeds to operation 608 in which the system controller scans the inqueue directory so as to read each of the job files stored therein. In one example, the jobs to be processed are placed in the inqueue directory in XML formatted files and are used to initialize the in-queue queue. Next, in operation 610, for each file in the inqueue directory, the system controller initializes an XML formatted file in the in-queue queue.

In one example, first test suite descriptions are read from a SUITEDIR directory while the description of the jobs to be processed are read from the INQDIR directory. The SUITEDIR is configured to be a hierarchy of test suites and their respective description files. As designed, each test suite defined in the SUITEDIR includes a group of jobs. As described in more detail below, the INQDIR directory is configured to include a plurality of files used to initialize the in-queue queue. In one implementation, the files in the INQDIR are configured to solely be read and not deleted or modified. As designed, the files in the INQDIR are configured to be read as XML formatted files and are configured to include specific tags designed to describe the TestRequest (i.e., the job).

In one embodiment, the parameters of a test suite description read in the XML format is shown in Table 5.

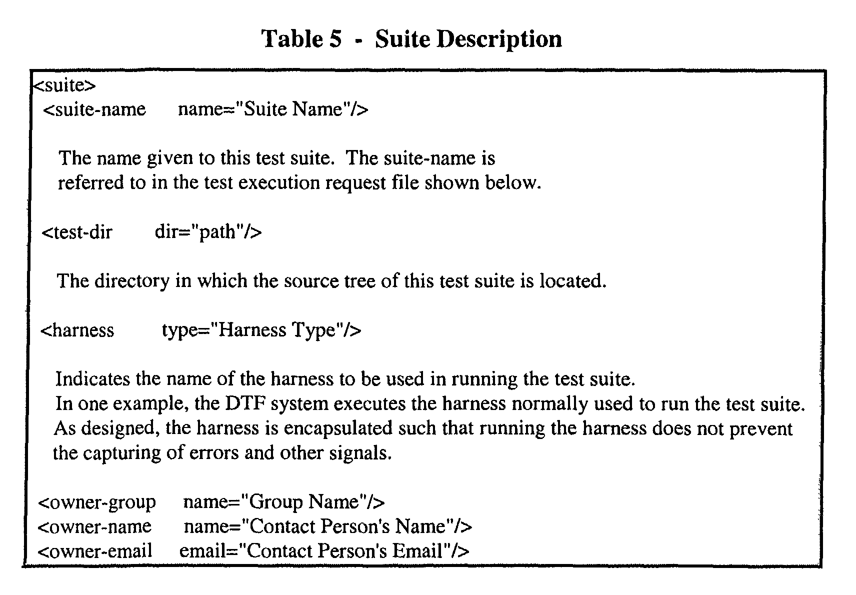

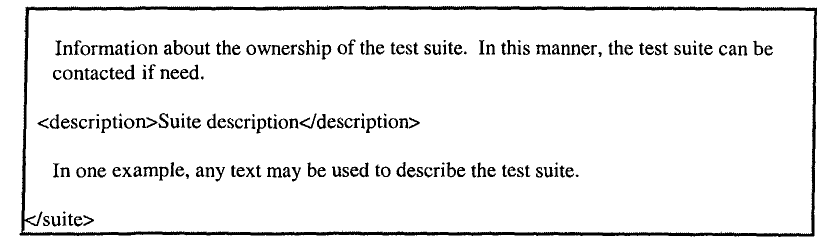

In one exemplary embodiment, different types of TestSuites can be set up in the system controller as shown in Table 6. For instance, the suite description file (i.e., suite-cfg.xml) is configured to be created in:
[suitedir]/[user suite dir]/suite-cfg.xml.

**Table 6 -**

| **TestSuite Setup** | | |
|---|---|---|
| 1 | Suite name | <suite-name name="GlobalSuite"/> |
| 2 | tonga_test, shell_test, jtreg_test, jck_test. | <harness type="jtreg_test"/> |
| 3 | In one example, this is the directory in which the source tree for the test suite is located. | <test-dir path="test"/> |
| 4 | Suite Information. | <owner-group name="I18N-QA"/> <owner-name name="User"/> <owner-email email="bae-chul.kim@eng.sun.com"/> <description>I18N GlobalSuite</description> |

In accordance to one embodiment, a user is required to create a Run.sh to execute the test suite. As designed, the test service of the test system is configured to execute a corresponding platform script having the following arguments:
- JDK_PATH:
   This is specified in the Job Request. As designed, in one example, it provides the test target JDK path in which the JAVA_HOME is JDK_PATH/[platform].
- VM_OPTS:
   This is also specified in a Job Request. For instance, it provides the test target Java command line argument options.
- RES_DIR: Also specified in a Job Request and is configured to be a test result directory for the test execution.
- SUITE_DIR: This is specified in config.xml file.
- OUTPUT_DIR: In one example, the OUTPUT_DIR is created by the system controller and is designed to provide the output dir for the test execution.

In one example, the test request can be set up in the system controller by first creating the inqueue directory as shown below:
/home/user/DTF_ws/in-queue directory.
As designed, the test request is configured to be created in XML format causing the exemplary file name to be any name.xml. In one embodiment, the test request can be set up as shown in Table 7.

**Table 7 -**

| **Setting Up the Test Request Job in the System Controller** | | |
|---|---|---|
| 1 | In one example, the Unix path for the Test Target JDK is implemented. Win32, Solaris, X86, Linux sub directories are required to be present in one example. As designed, JAVA_HOME is calculated implementing [this path]/[platform] | <jdk dir="/usr/local/java/jdk1.4" runtime=""/> |
| | Job name | <jobname jobname="i18n_globalsuite_test"/> |
| 3 | In one example, this is configured to be substantially the same as the test suite name in the suite-cfg.xml file. | <suitename suitename="GlobalSuite"/> |
| 4 | .dir: This is the Unix path for obtaining the results; .email: This is the Email address when the execution of the test suite is concluded; and .subject: This is the subject of the Email. | <results dir="/home/user /DTF-ws/results/" email="user@shorter" subject="GlobalSuite Test Results"/> |
| 5 | In one example, this is used as an option. When running a job requires running specific constraints, the constrains may be described implementing a set of key and value pairs. | <attr key="software.os.name" value="Windows 98"/> |

As will be discussed in more detail below, each job to be processed can be added to the in-queue queue by addTestRequest. Once added, the system controller ensures that the name of the newly added job is not substantially a duplicate of the name of a different job in the in-queue. As designed, each job is configured to have two sets of parameters. First parameter is the date/time the job to be processed becomes eligible for execution. Second parameter is a set of attributes specifying the type of the system required to execute the job to be processed. In one example, the set of attributes are configured to be Jini-type attributes revealing the configuration and attributes (requirements) required to execute the job to be processed.

With continued reference to Figure 13A, in operation 612, the set of attributes required to execute the job to be processed is read. In one example, the jobs to be processed can have either in execution or waiting status. As will be discussed in more detail below, typically, the job to be processed is in waiting status as long as it has not been dispatched to a suitable test system for execution while the job to be processed is in execution (i.e., active) if it has been dispatched for execution. In one example, the system controller is configured to scan the jobs to be processed in the waiting status looking for an eligible job. As designed, the job to be processed is eligible when the execution time for the job has been reached and when a suitable test system is available. Once the job to be processed has been dispatched for execution, the job to be processed is moved from the waiting status to the active status.

In one exemplary embodiment, a description file of a job to be processed is shown in Table 8.

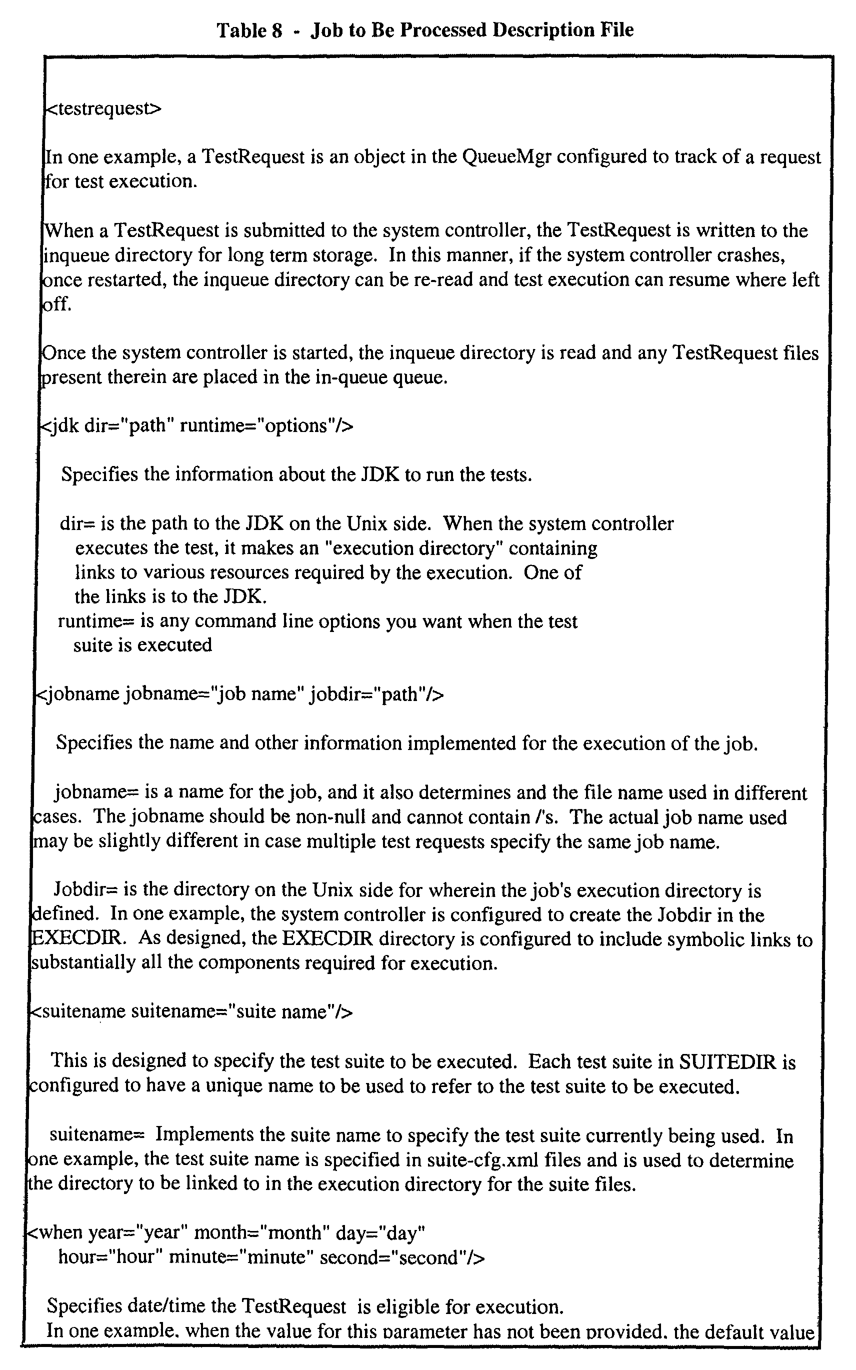

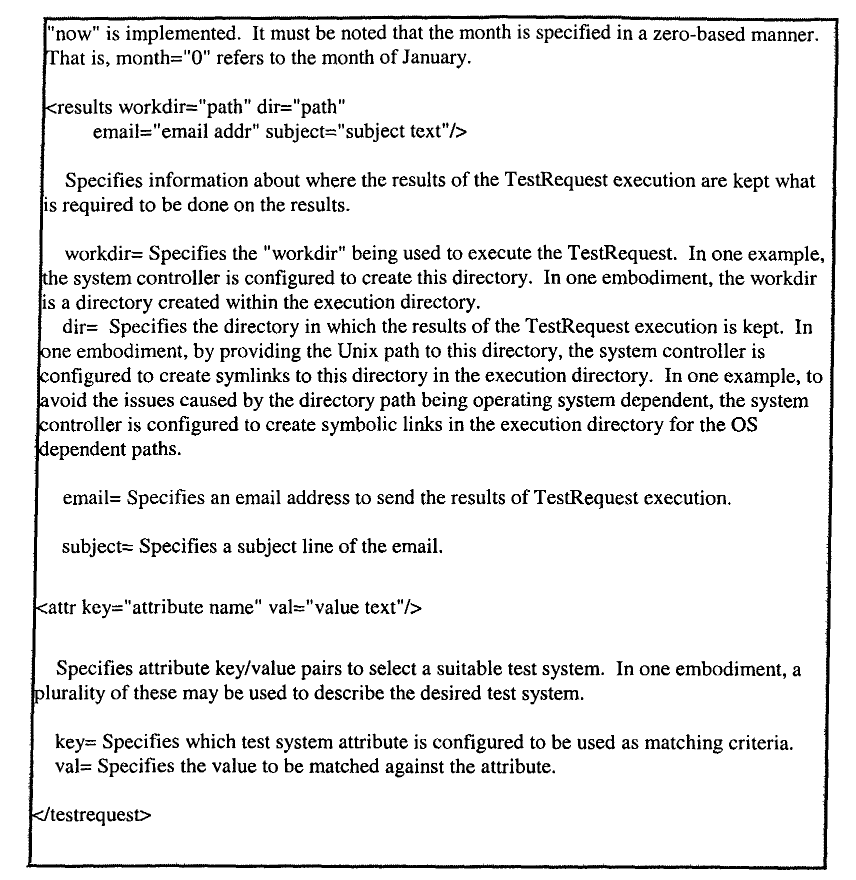

Continuing to operation 614, the system controller searches the look up service for a test system having attributes matching those of the job to be processed. For instance, in one embodiment, the system controller finds an available test system suitable to execute the job to be processed using the test machine proxy and attributes, as registered with the look up service. In one example, the look up service is a Jini look up service. Thereafter, in operation 614, the system controller searches the look up service for the test system having matching attributes.

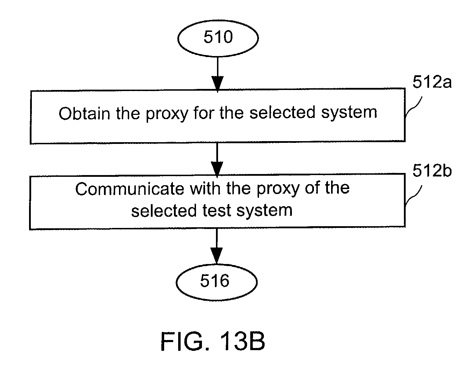

Once a test system has been selected, proceeding to operation 616, the system controller contacts the selected test system having the matching attributes by downloading the associated proxy. Additional information regarding the system controller contacting the selected test system is provided below with respect to Figure 13B. Thereafter, continuing to operation 618, the system controller submits the job to be processed to the selected test system. That is, the system controller dispatches a request to execute the job to be processed to the selected test system using the machine service proxy.

Subsequently, the system controller determines whether there are any additional jobs to be processed in the in-queue queue. If it is determined that there are additional jobs to be processed, the method proceeds to operation 612 in which the set of attributes required to execute the next job to be processed is read. However, if it is determined that there are no other jobs to be processed in the in-queue queue, the method continues to operation 604 in which the method determines whether there are any job files to be processed in the inqueue directory.

The system controller contacting the selected test system can further be understood with respect to the flow chart diagram of method operations in Figure 13B, in accordance with one embodiment of the present invention. In operation 512a, the system controller obtains the proxy for the selected test system. Specifically, in one example, the system controller downloads the machine service proxy from the Jini look up service. Thereafter, in operation 512b, the system controller communicates with the machine service proxy of the selected test system as if communicating with the test system.

As will be discussed in greater detail below, in addition to managing the queues and scheduling, the system controller is configured to manage the available test suites, logging facilities, TestRequest execution, and global resources contained therein.

### Global Resources:

As designed, the global resources are defined as resources utilized by the system controller to get the DTF system up and running. In one embodiment, the system controller implements a "controller" class to maintain the global resources. An exemplary list of global resources maintained by the system controller is provided in Table 9.

**Table 9 -**

| **Global Resources Maintained by the System Controller** | | |
|---|---|---|
| **RESOURCE** | **SYSTEM CONTROLLER METHOD** | **DESCRIPTION** |
| SuiteMgr | getSuiteMgr | In one embodiment, the SuiteMgr maintains a list of test suites in a table of suites (i.e., suite objects). As designed, in one example, the system controller implements the table of suites and API to find a desired test suite using the test suite descriptions. The test suite descriptions are maintained in XML formatted files stored in a directory hierarchy under the resource SUITEDIR. |
| SUITEDER | getSUITEDIR | In one implementation, the SUITEDIR is a directory hierarchy in which test suite descriptions are stored. |
| QueueMgr | getQueueMgr | In one instance, the QueueMgr manages a list of test execution requests (TestRequest objects), as the test execution requests are processed by the DTF system. In one embodiment, the XML formatted files in stored in an INQDIR are used to initialize a queue (i.e., in-queue). As designed, the test execution requests stored in the QUEUEDIR of the in-queue queue are configured to have almost the same format as the files stored in the INQDIR directory designed to reflect the current status of the files. |
| INQDIR | getINQDIR | In one example, the INQDIR includes a plurality of files designed to be used to initialize the in-queue queue. |
| QUEUEDIR | getQUEUEDIR | In one example, a plurality of files are implemented to represent the current status of each of the jobs in the in-queue. |
| LogMgr | getLogMgr | In one embodiment, a LogMgr is configured to provide a logging facility configured to |
| | | produce a plurality of XML formatted log files as well as providing a plurality of different levels of logging detail. |
| MainLog | getMainLog | In implementation, a "main" log is implemented. |
| LOGDIR | getLOGDIR | In one example, a plurality of log files are written into a LOGDIR designed to be a directory. |
| EXECDIR | getEXECDIR | In one instance, an EXECDIR is configured to contain a corresponding directory for each of the test execution requests. Each of the plurality of directories is designed to point to the resources needed to execute the corresponding test execution request. |
| Scheduler | getScheduler | In one embodiment, a Scheduler is a thread configured to occasionally query the QueueMgr as to the status of the test execution requests waiting to be dispatched for processing. The Scheduler is configured to handle a high level of test execution request dispatching while the QueueMgr is configured to handle a low level of test execution dispatch. |
| JINI Lookup server URL | GetJINILookup server | In one instance, a JINI Lookup server URL is a string containing a direct URL for the Jini lookup server. In one embodiment, Jini is implemented to find the correct test system to execute a test execution as well as to provide a communication support between the system controller and the plurality of test systems. |
| Machine ServiceMgr | GetMachine ServiceMgr | In one example, the MachineServiceMgr is designed to manage the interaction of the system controller with the MachineService on each of the test systems. Additionally, MachineServiceMgr is implemented to find the suitable test system for each of the test execution requests. |
| TestServiceMgr | GetTestService Mgr | In one example, a TestServiceMgr is configured to manage the system controller interaction with the TestService designed to handle a particular test execution request. |
| Client API | GetClient Interface | In one instance, a Client API is configured to be implemented when the system controller has exposed an API through Jini. |

### Available Test Suites

In one embodiment, the SuiteMgr is a class keeping a list of substantially all of the available test suites in the SUTTEDIR with each test suite being represented in an individual Suite object. Additionally, the SUITEDIR is configured to include a corresponding subdirectory called "TESTDIR" for each of the test suites with each TESTDIRs including a suite-cfg.xml file, configured to contain the description of the respective test suite.

In one exemplary embodiment, the following methods may be used on the test suites:
- getsuite: This method returns the suite object that corresponds to a particular TESTDIR;
- getSuiteByName: This method returns the corresponding name given to each test suite. As designed, each test suite is assigned a particular name. Thus, the same name is almost never assigned to different test suites, simultaneously.
- getSuites: Gets a list of substantially all of the test suites waiting to be processed.
- add/removeSuiteMgrListener: This method listens to or ignores the activities within the SuiteMgr. In one example, this task is achieved by using a thread configured to run so as to monitor activities within the suiteMgr.

### Logging Facilities:

In one example, the logging facilities are managed by the LogMgr and LogFile classes as they support a plurality of log files each designed for a specific purpose. In facilitating their processing, the log files are created in the XML format. Furthermore, each LogFile is independently directed to a file or a System.err (i.e., the console) while the logging facilities are controlled from the config.xml.

As designed, each log file instance includes a particular logging "level," which in one embodiment, can individually be turned on or off. A list of these logging levels are provided in Table 10 below.

**Table 10 -**

| **Logging Facility Levels** | |
|---|---|
| **Level** | **Description** |
| Error Error | In one example, these are configured to be the real errors (e.g., suite not found ,syntax errors in defining a job, etc.). |
| Warn | In one example, these are designed to be the warnings or potential errors (e.g., results directory not writeable, etc.). |
| Natter | In one instance, minutia information configured to provide a better understanding of the nature of DTF system or to provide a better awareness of the nature of the DTF system. In one embodiment, in a practical sense, the Natter messages may be ignored. |
| Info | In one embodiment, the Info level provides information about the functionality of the DTF system. Particularly, the Info would be beneficial when generating report summaries. |
| Trace | In one implementation, the Trace would be beneficial in debug tracing information. |

### Queue Management and Scheduling:

The QueueMgr class is configured to retain the scheduling information by maintaining a first queue containing the jobs waiting to be processed and a second queue of the jobs currently in execution. It must be noted to one having ordinary skill in the art that although in this embodiment the queues contain the test execution requests (jobs), in a different implementation, the queues can be configured to maintain any type of a process (e.g., network monitoring, database updating, etc.). As designed, the jobs in any of the queues are configured to be a subclass of a Queueable class. As designed, the Queuable is defined as any job that adheres to a certain syntactic guidelines posed by the system controller. In one example, the Queueable class is configured to provide a plurality of facilities, such as:
- Job Name: When called, this facility provides the particular name of any specified job;
- Execution time: When called, this facility provides a time subsequent which the specified job becomes eligible for execution. Until the Execution time arrives, the job is held without being considered for execution.

**Table 11 -**

| **Scheduling Queues** | | |
|---|---|---|
| **Directory name** | **QueueMgr name** | **Description** |
| in-queue | queue | In one embodiment, the in-queue holds jobs waiting to be executed. As designed, once the system controller is launched, the system controller is configured to read each of the test execution requests (i.e., jobs) from the XML files in the in-queue directory. |
| queue | active | In one example, the queue holds jobs that are currently in execution. Additionally, the status of each of the TestRequests Queuebles is written to an XML file in the queue directory. |

As designed, in one embodiment, the TestRequest is a common Queuable. The Test Request is configured to contain substantially all the information about a test execution request (e.g., a listener to capture the execution events dispatched by the test system in an attempt to determine whether the test system has finished, how to read the XML file containing the test execution request description, how to write an XML file reflecting the current status of the test execution request, etc., the dispatch time of the job for execution, the execution directory name etc.).

If a Queuable is executed at regular intervals, the Queuable also belongs to a Resubmittable class. As designed, once the execution of the Resubmittable has finished, the Resubmittable automatically submits itself to the queue for later execution. A Resubmittable configured to occasionally search for improperly dispatched TestRequests, is a QueueChecker.

In one example, a life-cycle of a Queuable is as follows:

### 1. Initialization:

Initially, the Queueable is placed in the queue. By way of example, the Queueable may be placed in the queue using either the addTestRequest or addQueuedJob methods. Thereafter, it must be ensured that the Queueable is suitable. That is, it must be determined that the job name is appropriate and that either queue does not contain a job having the same name.

### 2. Wait in queue:

The job is placed into the queue and is configured to remain in the queue until the time of execution for the job has been reached. In one embodiment, a canBeRun method may be called to determine whether the job is eligible to be run.

### 3. Considered for execution:

Once it has been determined that the job is eligible to be executed, a getPossibleTestToRun method is called returning the eligible job as one of the possible eligible jobs for execution. In one implementation, if the Queueable is a TestRequest, additional factors can be considered. For instance, a MachineServiceMgr is used to communicate to Jini look up service so as to determine whether an available test system having attributes matching to that of the TestRequest is available. If it determined that a matching test system is currently available to execute the TestRequest, a QueueMger.dispatchTest method is called to initiate the dispatching of the TestRequest to the selected Test System.

### 4. Execution:

In one example, a run method of the Queueable is called to execute the job.

### 5. Finish:

Once it has been determined that the run method has concluded its execution or that the execution of the TestRequest by the test system has concluded, a finish method is called. If the Queueable is one of the Resubmittables, the finish method causes the job to be re-dispatched. In one example, the job is re-dispatched using the queueMgr.resubmitQueuedJob. In this manner, the job is sent back to the step 2 and is configured to wait in the queue until it is executed at a later time.

While the QueueMgr class maintains the queues, the Scheduler class is configured to handle the high level aspects in choosing the next Queueable to be processed. In one example, if a test system is available, the Scheduler implements and executes a thread, which occasionally consults the QueueMgr in selecting the next eligible job to processed, and dispatching same once selected. In one embodiment, the details implemented by the Scheduler are handled by the QueueMgr. However, in a different embodiment, these details may be maintained by any suitable component.

The Scheduler is further designed to include a plurality of configuration parameters in the config.xml. In one example, the Scheduler configuration parameters are as provided in Table 12 below.

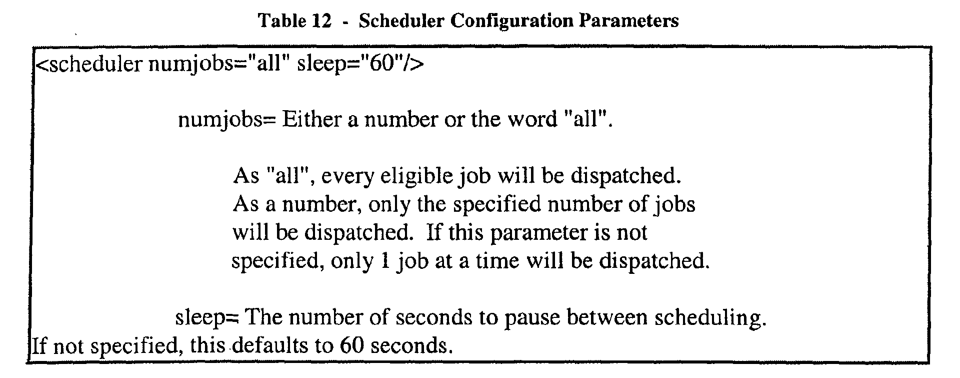

As shown in Table 12, the Scheduler is designed to scan through the queue (i.e., in-queue) searching for eligible jobs. Additionally, after each scan through, the Scheduler is configured to sleep for a particular length of time (e.g., a number of seconds). In the event the Scheduler finds an eligible job ready to be dispatched, the number of eligible jobs dispatched at any one time is controlled and limited by the number of numjobs parameter. In this manner, the numjobs and sleep parameters control the speed in which the jobs are dispatched from the queue (e.g., in-queue) to the active queue.

### TestRequest Execution

TestServiceMgr and MachineMgr handle most of the details governing the execution of TestRequests. However, it must be mentioned that the QueueMgr and TestRequest class also initialize a few aspects of the TestRequests execution. For instance, the QueueMgr.dispatchTest initiates the process of dispatching a TestRequest. Specifically, the QueueMgr.dispatchTest method connects the TestRequest, TestMachine, and TestSuite Objects together.

**Table 13 -**

| **Contents of the Execution Directory** | |
|---|---|
| **RESOURCE NAME** | **DESCRIPTION** |
| Qf | In one example, the qf link is configured to point to the XML file in the inqueue directory. |
| jdk | The jdk link points to a root of a directory tree containing a (JDK) to be used for the TestRequest execution, in accordance to one implementation. |
| suite | In one embodiment, the suite link points to a root of a directory tree for the Suite to be executed. |
| report | In one example, the report link points to a directory in which results of the TestRequest execution are to be written. |
| work | By way of example, the work link is a directory configured to be used by the test system as intermediate results, scratch files, etc. |

In one implementation, an execution directory is implemented so as to contain pointers to substantially all the resources required to execute a specific TestRequest. For instance, the execution directory resides on a Unix™ server and once formed, a plurality of links to the required resources are also created. In accordance to one embodiment, the execution directory is a subdirectory of the EXECDIR directory. Thus, initially, the test system is required to find and contact the EXECDIR over the network. As designed, each TestRequest creates a uniquely named subdirectory of EXECDIR for the TestRequest use. In one embodiment, a TestSuite.setExecDirectory method is used to inform the TestSuite object of the name of these subdirectories.

As designed, locating the EXECDIR on a Unix system is achieved by specifying a precise network file system (NFS) path to reach a server wherein the EXECDIR directory is stored. Where a test system is MS-Windows based, the test system mounts the EXECDIR on a specified drive letter (e.g., Y:, etc.). For instance, on a Windows based test system, a path Y:/test-dir/jdk/bin/java may be used to refer to the Java command. That is, in Windows, the symbolic link, Jdk, is interpreted on the master computer system or the master server and not the test system, leaving the master computer system to handle the locating of the real location of the Java command.

Once the TestRequest, TestMachine, and TestSuite objects have been connected and the execution directory has been created, a TestServiceMgr.runTestSuite method is called to perform the actual dispatching of the TestRequest. That is, an interaction between the system controller and the selected test system is initiated. Additionally, at this point, the TestRequest is removed from the waiting queue (i.e., the in-queue) to the active queue. In one embodiment, a plurality of notifications are delivered to a TestRequest.serviceEvent, notifying same of the progress of the interaction between the test system and the system controller. As designed, the TestServiceMgr.runTestSuite method is configured to determine whether the execution of the TestRequest has finished. Once the TestServiceMgr.runTestSuite determines that the execution has finished, the TestServiceMgr.runTestSuite is configured to call a TestRequest.finish method, causing the de-queuing of the TestRequest.

As discussed above with reference to Figure 1, the system controller includes a communication module responsible for managing the communication between the system controller and the test systems. As discussed earlier, the communication module is specifically responsible for locating available test systems, running test suites, gathering the system status, etc. In one example, the communication module includes a MachineServiceMgr and a TestServiceMgr.

As designed, the system controller implements the MachineServiceMgr to perform test system discovery (i.e., locating a test system to run a specific test suite). In accordance to one embodiment, a plurality of APIs, each based on a different search criteria format may be utilized to locate test systems. By way of example, in a search criteria format using a Hashtable method, the plurality of attributes required to run the test suite are added to the hashtable. An example of a code implementing a hashtable to search for a Windows NT machine having MKS is provided below in Table 4.

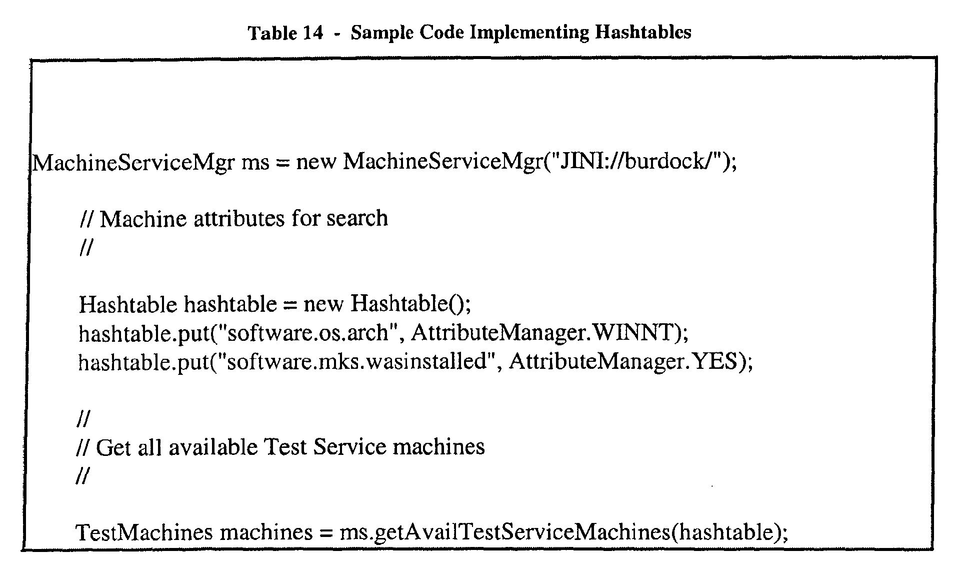

As designed, a list of substantially all of the available test systems is returned once the Get all available Test Service Machines() method is called. As discussed previously, the MachineServiceMgr is configured to use the Jini look up service and the list of the plurality of requested attributes to locate the available test systems. In one embodiment, besides locating the available test systems, the MachineServiceMgr is configured to ensure that the selected test systems are not currently running a different Jini Test Service (i.e., the selected test systems are not processing a different test suite). That is, in accordance with one example, the MachineServiceMgr has the capability to prevent the selected test system from simultaneously processing two different test suites.

Additionally, the system controller is designed to examine the test system attributes. By way of example, the system controller may implement the method shown in Table 15 to accomplish this task.

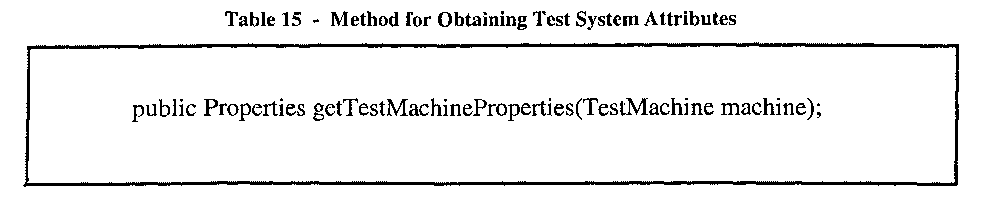

While the MachineServiceMgr is used for test system discovery, the TestServiceMgr component of the communication module is configured to manage the communication with the test systems as the test service runs a test suite. An exemplary request to run a test suite is provided below in Table 16.

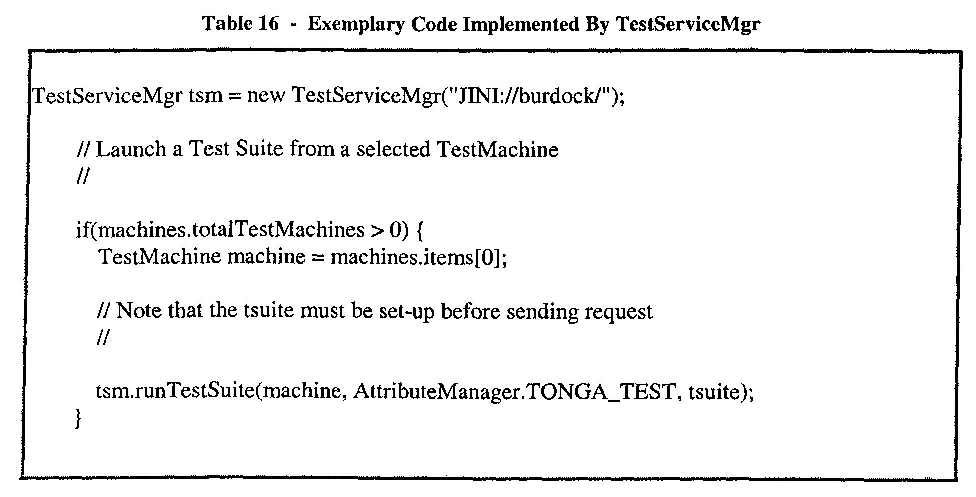

In addition to managing the communication with the test systems, the TestServiceMgr API also allows the system controller to cancel a submitted test suite or to request an updated status of test suite execution from the test service. As designed, in one example, each of the requests to run a test suite is a threaded operation, which is handled by a TestService class. The TestService class is responsible for running the test suite by dispatching the instructions to begin running the test suite on the test system to the test service. In one embodiment, this occurs by the TestService class first requesting the machine service to start an appropriate test service on the test system.

An exemplary test service platform script is shown in Table 17.

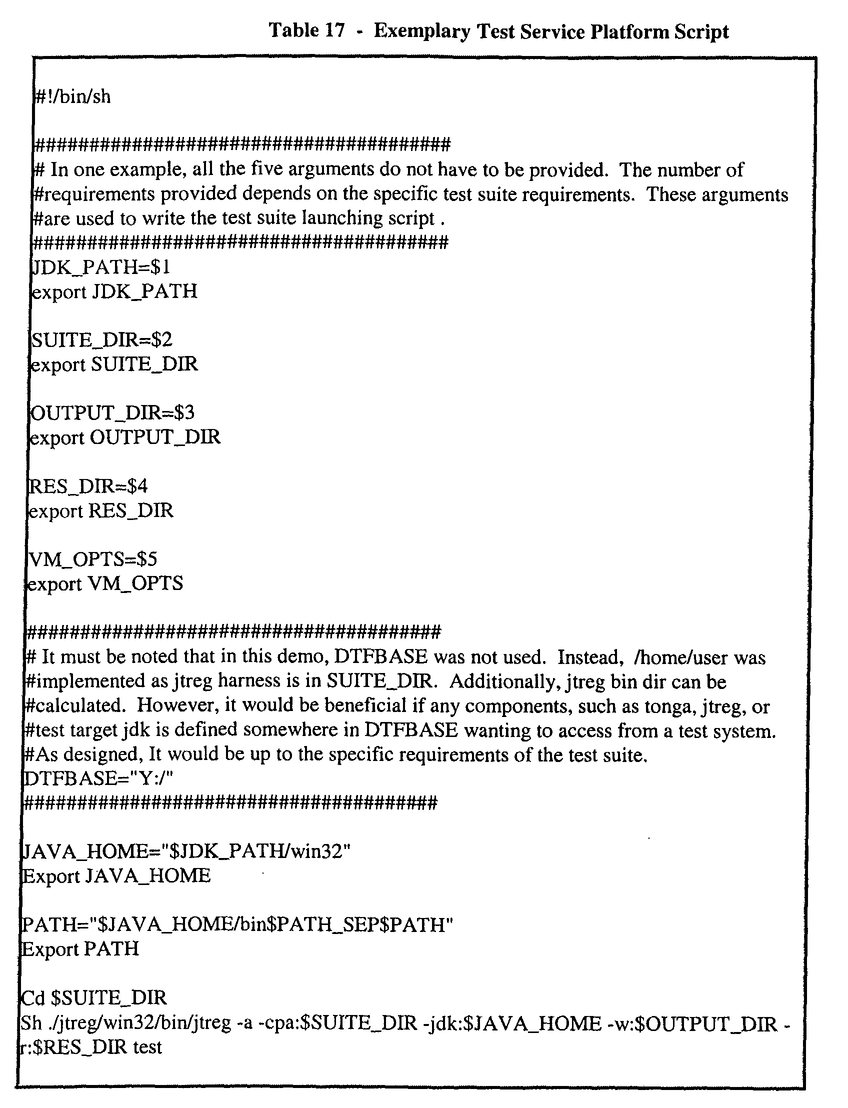

In one exemplary embodiment, running a TestSuite includes performing the following operations:
1. The TestService class contacting the Jini look up service so as to locate a machine service having the required attributes;
2. The TestService class getting into contact with the machine service component of the test system. In one embodiment, this is achieved by the TestService class obtaining the machine service proxy;
3. The TestService class asking the machine service to initiate the required test service;
4. The TestService class awaiting the receipt of a MachineEvent from the machine service, indicating the start of the test service;
5. The TestService class contacting the Jini look up service so as to locate the spawned test service;
6. The TestService class getting in contact with the test service implementing the test service proxy;
7. The TestService class asking the test system to initiate TestSuite execution; and
8. The TestService class awaiting the receipts of a TestServiceEvent from the test service. Thus, in accordance to one embodiment, the TestService class dispatches a set of instructions concerning how to run the test suite to the Test Service. Once dispatched, the TestService listens for events dispatched by the Test Service revealing the status of test execution progress. In this manner, if the system controller is shut down, the Test Service is configured to continue processing the test suite locally.

While the TestService class is responsible for running the test suite, the TestSuite class contains the instructions required to run the test suite. Additionally, the TestSuite class is configured to keep track of the status of the test suite execution. By way of example, a TestSuite class contains a plurality of instructions designed to carry out a plurality of test execution steps. In one implementation, the TestSuite contains instructions to carry out the following steps:
- Pre-Processing Clean Environment:
   In one embodiment, the Pre-Processing Clean Environment occurs by clearing the environment for any orphan processes left by the previous test execution.
- Setup:
   For instance, the Setup is achieved by setting up the environment variables required to perform the test execution request.;
- Execute TestSuite:
   In one implementation, the Execute TestSuite occurs by initiating the command configured to start the execution of the test execution request;
- Post-Processing:
   By way of example, the Post-Processing occurs by converting the results of the test execution into a desired format.
- Gather Test Results:
   In one embodiment, the Gather Test Results occurs by collecting the results produced by the results directory of the test execution request; and
- Post-Processing Clean Environment:
   For instance, the Post-Processing Clean Environment occurs by cleaning the environment (e.g., by cleaning of any orphan process left by the last test execution request) thus creating an environment wherein running the test execution request can be performed smoothly.
It must be appreciated that as designed, each TestSuite may include all, one, or a plurality of the steps. For instance, in accordance to one embodiment, a shell based test suite may implement the "Execute TestSuite" step. Additionally, in a different embodiment, the TestSuite may include instructions to carry out any appropriate test execution steps.

In accordance to one embodiment, the TestSuite is configured to maintain and document the status as well as the history of the test suite execution. Thus, as designed, two copies of the TestSuite are maintained during the test suite life cycle, one copy being maintained by the communication module, and a second copy being maintained by the TestService running on the selected test machine. In this manner, in the event of system or network failure, the system controller can ask for a copy of the TestSuite from the communication module. In one instance, this feature advantageously allows the system controller to recover from any system or network failure.

As designed, the TestSuite class is updated as it receives the events dispatched by the TestService. The events are configured to provide communication between the communication module and the test systems. In accordance to one embodiment, a MachineServiceEvent class as well as a TestServiceEvent class are implemented to support communication between the MachineService and the TestService. Additionally, the MachineServiceMgr as well as TestServiceMgr and TestService classes to receive MachineServiceEvents and TestServiceEvents, respectively.

By way of example, each of the MachineServiceEvent and TestServiceEvent classes extends a:
net.jini.core.event.RemoteEvent.
In addition to using the API to provide communication between the communication module and the Jini look up services, a listener class is also implemented. In this manner, when a listener class has been identified to Jini, the Jini look up service can be configured to dispatch events to the listener class. As designed, Jini implements the RMI services to process events. In one instance, to be able to receive events, the listener class implements a RemoteEventListener and provides a notify() method to receive the remote events.

When the MachineServiceMgr performs a search, the communication module 110 implements TestMachine and TestMachines classes to return the resulting test machines. Beneficially, these classes provide the system controller a simple manner to address a test system. Additionally, helper methods (e.g., ) may be implemented to refer to the test system's hostname and hostaddress. In this manner, the system controller can conveniently refer to the test system rather than implementing Jini's handles based on ServiceItem. For instance, a Jini pre-defined service item can be used to address the test system (e.g., a location of the test system). Furthermore, adding GUI services to the system controller will enable convenient reference to hostname and hostaddresses.

In addition to communicating with the test systems, the system controller 108 is configured to communicate with the Jini look up service 104. In one embodiment, once a connection is made between the system controller and the Jini look up service 104, a MachineServiceInterface class and a TestServiceInterface class are used to provide communication.

The MachineServiceInterface is configured to initiate the test service on the test systems and to retrieve a list containing substantially all of the test system attributes. The TestServiceInterface is configured to run a test suite on the test system, kill a test suite on the test system, and request the status of the test suite running on the test system.

Thus, in one envisioned embodiment, a plurality of processing resources (e.g., computer systems) connected through an intranet of a company, having different hardware/software configurations and platforms and defined in the same or different buildings or campuses can be coupled to a system running the registry service and the controller code. In this manner, the untapped resources of the plurality of registered processing resources can be accessed during day or night to execute a job without allocating each of the processing resources to process execution, solely. Consequently, the unused resources of each of the plurality of processing resources can execute subparts of a job, in parallel, thus significantly reducing the overall execution time of the job to mere seconds or hours, which typically may take days, weeks, or months.

The advantages of embodiments of the present invention are numerous. Most notably, an embodiment of the present invention enables a one stop maintaining and administrating of the system. The system controller further allows the removing of a test execution request submitted for execution, resubmitting of a test execution request previously ran, and viewing of the reports and logs during the execution of the process. Additionally, the system controller is implemented in a distributed processing framework system which implements an ad-hoc network of computer resources to execute a process wherein the attaching and detaching of a computer resource has substantially minimum or no effect on the process execution. Furthermore, the embodiments of the present invention are implemented in a DPF system, which uses computer resources not solely, limited to be used by the distributed processing framework system. As such, the system controller is implemented in the DPF system, which substantially eliminates the waste of resources associated with the prior art. Another advantage of the system controller is that it can be implemented in the distributed processing framework system, which in contrast to the prior art, is highly scalable. Still another benefit of the system controller is that the system controller in conjunction with the ad-hoc network of distributed computer resources create a self-healing network. Yet another benefit is that the system controller can be used in conjunction of a network of computer resources which span over a large geographical area.

Although the present invention mainly describes exemplary embodiments of a system controller used in a distributed test framework system design to execute a test suite, it must be understood by one having ordinary skill in the art that the system controller of the present invention can be implemented in any distributed processing framework system used to run any type of computer process. Additionally, although in one example the DTF and/or the DPF systems are called "KNigHT," or "DTF," in a different embodiment, the DTF and/or DPF systems can be called any arbitrary name. Additionally, although the present invention is described based on the Jini technology, other network technologies having the capability to create an ad-hoc group of processing resources may be implemented (e.g., RMI, TCP/IP Sockets, etc.). Furthermore, although the present invention implements Java programming language, other programming languages may be used to implement the embodiments of the present invention (e.g., C, C_{++,} any object oriented programming language, etc.).

The present invention can be implemented in software provided to a computer on a carrier medium such as a storage medium, e.g. a floppy disk, hard disk, CD ROM, or programmable memory device, or a transient medium, i.e. a signal, e.g. an electrical, optical, microwave, acoustic or rf signal.

Although the foregoing invention has been described in some detail for purposes of clarity of understanding, it will be apparent that certain changes and modifications may be practiced within the scope of the appended claims. Accordingly, the present embodiments are to be considered as illustrative and not restrictive, and the invention is not to be limited to the details given herein, but may be modified within the scope of the appended claims.

## Claims

1. A method for managing an execution of a software processing job, the method comprising:
enabling a controller code;
finding a suitable and available networked processing resource registered with a registry service to execute the software processing job; and
monitoring the execution of the software processing job by a selected processing resource and an availability of the selected processing resource while the controller code is enabled, the controller code configured to be executed on a networked computer.

2. A method for executing a software processing job as recited in claim 1, wherein the networked computer is a master computer system, and enabling a controller code includes,
turning on a master computer system configured to include the controller code; and
executing the controller code on the master computer system.

3. A method for executing a software processing job as recited in claim 1, wherein finding the suitable and available networked processing resource registered with the registry service to execute the software processing job includes,
searching the registry service so as to locate the suitable networked processing resource, the suitable networked processing resource having a machine service configured to have a machine service proxy and a set of machine service attributes, the machine service attributes substantially matching a set of requirements of the software processing job; and
ensuring an availability of the suitable networked processing resource to execute the software processing job.

4. A method for executing a software processing job as recited in claim 3, wherein ensuring the availability of the suitable networked processing resource to execute the software processing job includes,
verifying a nonexistence of a registered process service proxy and a set of registered process service attributes of a process service having a type substantially matching a type of the software processing job for the selected processing resource.

5. A method for executing a software processing job as recited in claim 1, wherein monitoring the execution of the software processing job by the selected processing resource and the availability of the selected processing resource while the controller code is enabled includes,
obtaining a machine service proxy of the selected processing resource, the machine service proxy being registered with the registry service;
communicating with the machine service proxy so as to request the networked processing resource to start executing the software processing job;
obtaining a process service proxy of a process service spawned by the machine service of the selected processing resource, the process service proxy being registered with the registry service; and
communicating with the process service proxy so as to initiate the execution of the software processing job,
wherein the process service proxy and the set of process service attributes are configured to be removed from the registry service upon the conclusion of the software processing job indicating the availability of the selected processing resource to execute a process having substantially similar requirements.

6. A method for executing a software processing job as recited in claim 1, wherein the registry service is a look up service.

7. A method for executing a software processing job as recited in claim 1, wherein the networked processing resource is a test system.

8. A process execution scheduling method, the method comprising:
launching a controller code on a computer system;
determining the existence of a process for execution, the determining including,
scheduling the process to be executed by a selected processing resource registered with a registry service if the process awaits execution, the selected processing resource being one of many processing resources being networked with the computer system, and the scheduling including,
reading a set of attributes of the process;
searching the registry service for the selected processing resource, the selected processing resource configured to have a set of attributes substantially matching the set of attributes of the process;
contacting the selected processing resource; and
submitting the job execution to the selected processing resource; and
waiting for the process to be submitted for execution if there are no processes awaiting execution.

9. A process execution scheduling method as recited in claim 8, wherein reading a set of attributes of the process includes,
scanning an inqueue directory so as to read a first file containing the process; and
initializing a second file in a temporary storage implementing the first file in the inqueue directory containing the process,
wherein a set of attributes of the process in the first file is substantially similar to a set of attributes of the second file.

10. A process execution scheduling method as recited in claim 9, wherein the temporary storage is a queue.

11. A process execution scheduling method as recited in claim 8, wherein searching the registry service for the selected processing resource includes,
scanning the registry service for the selected processing resource, the processing resource configured to have a machine service having a machine service proxy and a set of machine service attributes; and
locating the selected processing resource, the set of machine service attributes of the selected processing resource substantially matching the set of attributes of the process.

12. A process execution scheduling method as recited in claim 8, wherein contacting the selected processing resource includes,
obtaining a machine service proxy of the machine service of the selected processing resource; and
communicating with the machine service proxy so as to request an execution of the process.

13. A process execution scheduling method as recited in claim 8, wherein submitting the job execution to the selected processing resource includes,
obtaining a process service proxy of a process service spawned by a machine service of the selected processing resource, the process service being registered with the registry service, the process service having a type substantially similar to a type of the process; and
communicating with the process service proxy so as to request the initiation of the execution of the process.

14. A process execution scheduling method as recited in claim 8, wherein the process is a test execution request.

15. A process execution scheduling method as recited in claim 8, wherein the processing resource is a test system.

16. A process execution scheduling method as recited in claim 8, wherein the registry service is a look up service.

17. A process execution scheduling, distributing, and management system, the system comprising:
a communication module configured to enable and manage communication between the system and a processing resource registered with a registry service, the processing resource configured to execute a process; and
a process management module configured to manage the execution of the process by implementing an inqueue directory configured to contain a file substantially for each process submitted for execution.

18. A system as recited in claim 17, wherein the communication module implements one of Jini™, Remote Method Invocation, and Transport Commit Protocol/Internet Protocol (TCP/IP) socket so as to enable network communication between the system and the processing resource.

19. A system as recited in claim 17, wherein the process management module implements each file in the inqueue directory to initialize a corresponding file in one of an in-queue queue and an execution queue.

20. A system as recited in claim 17, wherein each file in the in-queue queue and the execution queue is formatted in Extensible Markup Language (XML).

21. A carrier medium carrying computer readable code for controlling a computer system to carry out the method of any one of claims 1 to 16.
